# EUROPEAN PATENT SPECIFICATION

(11) **EP 4 261 456 B1**
(45) Date of publication and mention of the grant of the patent: **10.04.2024**
(21) Application number: 23161954.5
(22) Date of filing: 15.03.2023
(51) Int. Cl.: F22B 37/10

(54) **HETEROGENEOUS TUBE BUNDLE GROUP HEAT TRANSFER STRUCTURE, CORNER TUBE BOILER AND OPERATION METHOD THEREOF**
HETEROGENE ROHRBÜNDELGRUPPENWÄRMEÜBERTRAGUNGSSTRUKTUR, ECKROHRKESSEL UND BETRIEBSVERFAHREN DAFÜR
STRUCTURE DE TRANSFERT DE CHALEUR DE GROUPE DE FAISCEAUX DE TUBES HÉTÉROGÈNES, CHAUDIÈRE À TUBES D'ANGLE ET SON PROCÉDÉ DE FONCTIONNEMENT

(30) Priority: 21.03.2022 CN 202210278321
(43) Date of publication of application: 18.10.2023
(73) Proprietor: Xi'an Jiaotong University, Xi'an, Shaanxi 710049 (CN)
(72) Inventor: DENG, Shifeng, Xi'an, 710049 (CN); ZHAO, Qinxin, Xi'an, 710049 (CN); QU, Teng, Xi'an, 710049 (CN); SHAO, Huaishuang, Xi'an, 710049 (CN)
(74) Representative: Vitina, Maruta

(56) References cited:
- EP-A1- 3 469 257
- EP-B1- 3 469 257
- FR-A- 1 004 820
- FR-A- 1 250 438
- US-A- 1 870 670

## Description

### TECHNICAL FIELD

This application relates to corner tube boilers, and more particularly to a heterogeneous tube bundle group heat transfer structure, a corner tube boiler, and an operation method thereof.

### BACKGROUND

Recently, environmental policies have become increasingly strict to address the persistent occurrence of haze problems, and the traditional coal-fired corner tube boiler has been gradually replaced with the oil-fired and gas-fired corner tube boilers. Compared with the coal-fired flue gas, the oil-fired or gas-fired flue gas has an extremely low particulate matter (PM) level, and generally will not cause blockage. In view of this, a gap structure can be introduced to enhance the heat transfer. There are already many boilers designed based on gap-enhanced heat transfer, such as coil boilers and spiral wound finned tube boilers. Compared with the traditional boiler structure with a heat transfer coefficient of about 50 W/m²·K, the heat transfer coefficient of the gap-enhanced boiler structure can reach 100 W/m²·K, but there are still some shortcomings, such as large total cross-sectional area of the flue and insufficient compactness. Therefore, the current development trend of boilers is to further improve the heat transfer coefficient, reduce the flue cross-sectional area per unit power, improve boiler efficiency, lower the steel consumption, and reduce the carbon emissions of boiler manufacturing and operation. Incorporating a modified gap enhancement heat transfer concept into the design of corner tube boilers is considered as an effective and feasible way.

Traditional corner tube boilers mostly use flag pattern surface or pin-finned enhancement. For example, Chinese patent publication No. 104154661A filed by Xi'an Jiaotong University discloses an oil- and gas-fired corner tube boiler structure with a pin-finned reinforced convection tube panel, in which the convective heat transfer surface is enhanced with the pin-finned structure, whose height increases with the decrease of flue gas temperature. The pin-finned structure significantly enhances the heat transfer, but still struggles with a large size. Chinese patent No.211625195U filed by Harbin Hongguang Boiler General Factory Co., Ltd. discloses a large-capacity longitudinal corner tube boiler to aim to solve the problem of large volume, but this corner tube boiler does not achieve the greater power output in the original size from the perspective of heat transfer enhancement. Chinese patent No. 209470185U filed by Harbin Sifang Boiler Co., Ltd. discloses a single-drum transverse lower-intake gas/oil-fired corner tube boiler, in which the burner is arranged downward and obliquely, increasing the residence time of flame and optimizing the combustion. The existing patent technologies still focus on the optimization of some aspects of the traditional corner tube boiler structure, and do not involve fundamental innovation and modification.

Four corners of the corner tube boiler each is a frame structure formed by a large-diameter thick-walled downcomer with a steam drum, a water wall, a header, and a reinforcing beam. The corner tube boiler features good water circulation performance, and the external downcomers can delivery water to the tube bundle area with intense evaporation in time. The upper steam lead tube can take the steam away in time to avoid steam accumulation affecting the water circulation. Therefore, for those steam boilers with an enhanced heat transfer surface, the corner tube structure can optimize the water circulation to the greatest extent.

Planar water-cooled premixed combustion technology has been widely used in the past ten years, but the existing corner tube boiler structures are only compatible with the traditional diffusion burner, and fail to adapt to the new water-cooled premixed combustion technology. Therefore, it is urgently needed to design and develop a boiler structure that can match the planar water-cooled premixed burner well. Further tube bundle structures are disclosed in documents EP3469257 A1, US1870670 A, FR1004820 A and FR1250438 A.

### SUMMARY

In view of the deficiencies in the prior art, this application provides a heterogeneous tube bundle group-based heat transfer structure-enhanced corner tube boiler, which has enhanced heat transfer efficiency, and reduced size. Moreover, the corner tube boiler also has good water circulation performance, and is compatible with the planar water-cooled premixed burners and traditional diffusion burners, and can generate saturated steam, superheated steam, and hot water by slight structural adjustment.

Technical solutions of this application are described as follows.

In a first aspect, this application provides a heterogeneous tube bundle group heat transfer structure, including:
a plurality of symmetrical bi-wing longitudinal curved finned tubes; and
a plurality of symmetrical bi-wing longitudinal plate finned tubes;
characterized in that each of the plurality of symmetrical bi-wing longitudinal curved finned tubes includes a first bare tube, and bi-wing longitudinal curved fins are symmetrically provided along an axis of a vertical section of the first bare tube;
each of the plurality of symmetrical bi-wing longitudinal plate finned tubes includes a second bare tube, and longitudinal flat steels are symmetrically provided along an axis of a vertical section of the second bare tube; and
the plurality of symmetrical bi-wing longitudinal curved finned tubes and the plurality of symmetrical bi-wing longitudinal plate finned tubes are alternately arranged in at least two rows; tubes adjacent to a symmetrical bi-wing longitudinal curved finned tube inside a tube bundle group are both a symmetrical bi-wing longitudinal plate finned tube; and an end of each row of the tube bundle group is the symmetrical bi-wing longitudinal curved finned tube or the symmetrical bi-wing longitudinal plate finned tube.

In an embodiment, a diameter of the first bare tube is the same as that of the second bare tube; and the plurality of symmetrical bi-wing longitudinal curved finned tubes and the plurality of symmetrical bi-wing longitudinal plate finned tubes have a membrane wall structure at a bending portion and a portion connected to a header.

In an embodiment, fins of adjacent two symmetrical bi-wing longitudinal curved finned tubes are configured to surround the symmetrical bi-wing longitudinal plate finned tubes therebetween; a gap is provided between a symmetrical bi-wing longitudinal curved finned tube and a symmetrical bi-wing longitudinal plate finned tube adjacent thereto to be configured as a flue gas flow channel to enhance convective heat transfer; along a flue gas flow direction, every four tubes form a hexagonal prism-shaped space, wherein the hexagonal prism-shaped space is surrounded by two longitudinal curved fin back arc segments consisting of AB segment and DE segment, two longitudinal plate fin straight segments consisting of BC segment and EF segment, and two longitudinal bare tube arc segments consisting of CD segment and FA segment; and the hexagonal prism-shaped space has a flue gas inlet and a flue gas outlet.

In an embodiment, each of the plurality of symmetrical bi-wing longitudinal curved finned tubes is formed by integral rolling, continuous casting and rolling or forging, or by welding a round tube to the first bare tube and cutting; and each of the plurality of symmetrical bi-wing longitudinal plate finned tubes is formed by integral rolling, continuous casting and rolling or forging, or by welding the longitudinal flat steel to the second bare tube by double-sided full penetration welding.

In a second aspect, this application provides a corner tube boiler, including:
a boiler drum, a membrane wall, a steam guide tube, a downcomer, an upper horizontal header, a lower horizontal header, a burner, an energy saver, a condenser, a condensing air preheater, and a heterogeneous tube bundle group;
the heterogeneous tube bundle group is the heterogeneous tube bundle group heat transfer structure;
a space enclosed by the membrane wall is configured as a furnace; the upper horizontal header and the lower horizontal header are provided correspondingly on top and bottom ends of the furnace; the heterogeneous tube bundle group is provided in a flue gas exhaust direction of the furnace; and a center line of the boiler drum is in the same plane as a center line of the upper horizontal header, and is parallel to a front-wall membrane wall;
two ends of the membrane wall are connected to the upper horizontal header and the lower horizontal header, respectively; a lower end of the steam guide tube is connected to the upper horizontal header, and an upper end of the steam guide tube is connected to an upper part of the boiler drum; an upper end of the downcomer is connected to the boiler drum and the upper horizontal header, and a lower end of the downcomer is connected to the lower horizontal header; an upper end of the heterogeneous tube bundle group is connected to the upper horizontal header, and a lower end of the heterogeneous tube bundle group is connected to the lower horizontal header; the heterogeneous tube bundle group, the energy saver, the condenser, and the condensing air preheater are arranged sequentially along a flue gas flow direction; and the energy saver is located below the boiler drum; and
the membrane wall includes a left-wall membrane wall, a right-wall membrane wall, and the front-wall membrane wall; a first row of tube bundles of the heterogeneous tube bundle group is configured to bend towards the front-wall membrane wall to form a top-wall membrane wall and a bottom-wall membrane wall; and the burner is provided on the left-wall membrane wall, the right-wall membrane wall or the front-wall membrane wall.

In an embodiment, an overhead condenser is provided above the boiler drum; the overhead condenser has a shell-and-tube structure; an inlet on a shell side of the overhead condenser is connected to an outlet of the boiler drum, and an outlet on the shell side of the overhead condenser is connected to an inlet of the boiler drum; a tube side of the overhead condenser is fed with cooling water, and an outflow from an outlet on the tube side of the overhead condenser is high-temperature water or wet saturated steam; the inlet on the shell side of the overhead condenser is connected to a steam outlet of the boiler drum, and the outlet on the shell side of the overhead condenser is connected to a top inlet of the boiler drum; and the number of passes on the tube side is 1~4.

In an embodiment, 1~6 rows of bare tube bundles are arranged in front of the heterogeneous tube bundle group to reduce a temperature of a flue gas entering the heterogeneous tube bundle group; and regarding a row of symmetrical bi-wing longitudinal curved finned tubes closest to the furnace and a row of symmetrical bi-wing longitudinal plate finned tubes closest to the furnace, an end of fins at a side close to the furnace is cut to reduce a length of the fins extending into the furnace.

In an embodiment, the corner tube boiler further includes a steam superheater. The steam superheater is provided in front of the heterogeneous tube bundle group; and an inlet of the steam superheater is connected to a saturated steam outlet of the boiler drum or the outlet on the tube side of the overhead condenser.

In an embodiment, the upper horizontal header includes an upper header, an upper-left header, an upper-right header, and an upper-front header;
the upper header is connected to the upper end of the heterogeneous tube bundle group; the upper-left header is connected to an upper end of the left-wall membrane wall; the upper-right header is connected to an upper end of the right-wall membrane wall; and the upper-front header is connected to an upper end of the front-wall membrane wall; and
ends of the upper header are connected to the upper-left header and the upper-right header, respectively; ends of the upper-front header are connected to the upper-left header and the upper-right header, respectively; and center lines of the upper header, the upper-left header, and the upper-right header are all in the same horizontal plane which is a steam-water interface of the upper header, the upper-left header, the upper-right header, and the upper-front header.

In an embodiment, the burner is a planar water-cooled premixed burner, a diffusion burner, or a premixed burner; wherein the premixed burner is a metal fiber burner, a porous ceramic burner, a ceramic plate burner or a perforated metal plate burner;
when the planar water-cooled premixed burner is used, the planar water-cooled premixed burner is arranged on a front wall of the furnace; a flat steel between adjacent water-cooled tubes in a water-cooled tube bundle at a position on the front wall of the furnace where the planar water-cooled premixed burner is provided is removed to form a gap; and a rectangular-section premixer is arranged on an air duct connecting an air side of the planar water-cooled premixed burner with the condensing air preheater;
when the diffusion burner is used, the diffusion burner is installed on the left-wall membrane wall or the right-wall membrane wall; a separation membrane wall is provided in the furnace; the separation membrane wall is a single-row membrane water-cooled wall; a left side of the separation membrane wall is connected to the left-wall membrane wall through a flat steel, and a right side of the separation membrane wall extends into the furnace; no flat steel is provided between adjacent two tubes in a tail tube bundle of the separation membrane wall; and upper and lower ends of the separation membrane wall are connected to the upper horizontal header and the lower horizontal header, respectively; and
when the premixed burner is used, and the premixed burner is provided on the left-wall membrane wall, the right-wall membrane wall or the front-wall membrane wall.

In an embodiment, the steam guide tube includes a main steam guide tube, a branch steam guide tube, and an independent steam guide tube;
one end of the main steam guide tube is connected to the boiler drum, and the other end of the main steam guide tube is closed; one end of the branch steam guide tube is connected to the upper header, the upper-left header, the upper-right header, and the upper-front header, and the other end of the branch steam guide tube is connected to the main steam guide tube; a plurality of main steam guide tubes are arranged along the center line of the boiler drum, and each of the plurality of main steam guide tubes is connected to a plurality of branch steam guide tubes for collecting steam from the heterogeneous tube bundle group and the membrane wall; and one end of the independent steam guide tube is connected to the upper header, the upper-left header, the upper-right header, and the upper-front header, and the other end of the independent steam guide tube is connected to the boiler drum.

In an embodiment, the lower horizontal header includes a lower header, a lower-left header, a lower-right header, a lower-front header, and a lower distribution header;
the lower header is connected to the lower end of the heterogeneous tube bundle group; the lower-left header is connected to a lower end of the left-wall membrane wall; the lower-right header is connected to a lower end of the right-wall membrane wall; and the lower-front header is connected to a lower end of the front-wall membrane wall;
ends of the lower header are connected to the lower-left header and the lower-right header, respectively; center lines of the lower header, the lower-left header, and the lower-right header are located in the same horizontal plane which is above center lines of the lower-front header and the lower distribution header; and the lower distribution header is connected to the lower end of the downcomer, and the lower distribution header and the lower header are connected by a plurality of branch pipes;
the downcomer includes a front-wall downcomer, a tail downcomer, and a water-feeding downcomer, wherein the water-feeding downcomer is provided in the heterogeneous tube bundle group; and
an upper end of the front-wall downcomer is connected to the upper-left header and the upper-right header; the front-wall downcomer penetrates through the lower-left header and the lower-right header, and a lower end of the front-wall downcomer is connected to the lower-front header; an upper end of the tail downcomer is connected to the boiler drum, and a lower end of the tail downcomer is connected to the lower-left header and the lower-right header; and a lower end of the water-feeding downcomer is connected to the lower distribution header for feeding water to the heterogeneous tube bundle group.

In an embodiment, when the steam guide tube is disconnected from the boiler drum, the corner tube boiler acts as a hot water boiler; heating return water first enters ends of the upper-left header and the upper-right header close to a tail end of the corner tube boiler, and is fed to an area of the upper header corresponding to 2^{nd}~5^{th} rows of tube bundles in the heterogeneous tube bundle group; the heating return water flows down to the lower header along the 2^{nd}~5^{th} rows of tube bundles, enters the lower header below a first row of the heterogeneous tube bundle group along the lower-left header and the lower-right header, flows upward to the upper header, and enters the upper horizontal header corresponding to a second row of the bare tube bundle along the upper-left header and the upper-right header to be distributed; the heating return water flows downwards to the lower horizontal header corresponding to the second row of the bare tube bundle, enters the lower-left header, the lower-right header, and the lower-front header, and then flows upward to the upper horizontal header along the left-wall membrane wall, the right-wall membrane wall, the front-wall membrane wall, and a first row of the bare tube bundle and leaves the corner tube boiler; and
a safety valve is provided near an outlet of the upper horizontal header for discharging excess steam in time in the case of stagnant flow.

In an embodiment, when the burner is the planar water-cooled premixed burner, the rectangular-section premixer is provided at a diverging section of the air duct connecting the planar water-cooled premixed burner with the air side of the condensing air preheater;
the rectangular-section premixer includes a combustible gas distribution pipeline and a plurality of combustible gas spaces arranged in parallel; and the plurality of combustible gas spaces are communicated with the combustible gas distribution pipeline; and
each of the plurality of combustible gas spaces is provided with a converging-diverging channel; a combustible gas hole is provided at a narrowest position of the converging-diverging channel; a combustible gas enters the plurality of combustible gas spaces through the combustible gas distribution pipeline and then enters an air space through the combustible gas hole; and air is first accelerated and then decelerated through the converging-diverging channel, and evenly mixes with the combustible gas, wherein the combustible gas includes natural gas, hydrogen or a natural gas-hydrogen mixture.

In an embodiment, the membrane wall is provided with a plurality of planar water-cooled premixed burners which are arranged in a height direction and/or a horizontal direction;
when the plurality of planar water-cooled premixed burners are arranged in the horizontal direction, the front-wall membrane wall, the upper header, the upper-front header, the lower-front header and the boiler drum are extended; and
when the plurality of planar water-cooled premixed burners are arranged in the height direction, the heterogeneous tube bundle group, the membrane wall and the downcomer are elongated, and the boiler drum is enlarged, and the energy saver, the condenser and the condensing air preheater are arranged in the height direction.

In an embodiment, when the plurality of planar water-cooled premixed burners are arranged in the height direction, the corner tube boiler is divided from a middle thereof in the height direction into an upper part and a lower part; a bottom of the upper part and a top of the lower part are respectively provided with a header; and the header on the bottom of the upper part and the header on the top of the lower part are connected through a 180° bending portion.

In an embodiment, when the plurality of planar water-cooled premixed burners are arranged in the horizontal direction, the upper-front header and the lower-front header are bent towards a rear of the furnace, so that the plurality of planar water-cooled premixed burners are arranged at a set angle; and the front-wall membrane wall is bent towards the rear of the furnace at the set angle.

In an embodiment, the plurality of planar water-cooled premixed burners are arranged in two rows in the horizontal direction, the two rows of planar water-cooled premixed burners are arranged opposite to each other; each row of planar water-cooled premixed burners is provided with the membrane wall, the steam guide tube, the downcomer, the upper horizontal header, the lower horizontal header and the heterogeneous tube bundle group; and the two rows of planar water-cooled premixed burners share the boiler drum, the energy saver, the condenser and the condensing air preheater.

In an embodiment, the plurality of planar water-cooled premixed burners are arranged along the horizontal and height directions at the same time.

In a third aspect, this application provides an operation method of the corner tube boiler, including:
supplying cold air by a boiler fan; heating the cold air by the condensing air preheater followed by feeding to the rectangular-section premixer; feeding the combustible gas to the furnace to be burned, so as to form a slit flame at a root of a water-cooled tube bundle and generate high-temperature flue gas; and allow the high-temperature flue gas to sequentially pass through the heterogeneous tube bundle group, the energy saver, the condenser, and the condensing air preheater to be cooled to 50°C or below followed by discharge through a chimney; and
allowing feeding water to enter the condenser to condense the flue gas and then enter the energy saver to be preheated to 100 °C to enter a lower part of the boiler drum; distributing evenly the feeding water along the downcomer and the lower horizontal header to lower ends of the heterogeneous tube bundle group and the membrane wall to make the feed water absorb heat and continuously evaporate to form a steam-water mixture; allowing the steam-water mixture to enter the upper horizontal header for steam-water pre-separation, wherein the steam is allowed to enter a steam space in an upper part of the boiler drum through the steam guide tube and to leave the corner tube boiler from a top of the boiler drum in a form of saturated steam; and a steam-water interface in the corner tube boiler is located on a horizontal center plane of the boiler drum.

In an embodiment, the operation method further includes:
if superheated steam is required, allowing the saturated steam leaving the boiler drum to enter a steam superheater to continue to absorb heat to form the superheated steam; and supplying the superheated steam from a top of the steam superheater to users.

In an embodiment, the operation method further includes:
if low-temperature saturated steam or hot water is required, after the saturated steam leaves the boiler drum and enters a top of the overhead condenser, allowing the saturated steam to release heat on the shell side of the overhead condenser to form liquid water and allowing the liquid water to flow back to the boiler drum; and allowing low-temperature feed water to absorb heat at the tube side of the overhead condenser to form the low-temperature saturated steam or hot water, or heating the low-temperature saturated steam into the superheated steam by the steam superheater.

In an embodiment, the saturated steam from the boiler drum enters the shell side of the overhead condenser, releases heat to form liquid water, and flows into the boiler drum along a pipe at a bottom of the overhead condenser under an action of gravity; heated low-temperature water flows along the tube side of the overhead condenser, and absorbs the heat released by the saturated steam to form high-temperature water above 110°C or wet saturated steam to leave the overhead condenser; and
if hot water is produced, the corner tube boiler is operated at a micro positive pressure or a vacuum negative pressure to produce hot water no more than 110°C or 85°C.

In an embodiment, when the planar water-cooled premixed burner is used, natural gas is uniformly introduced in the rectangular-section premixer to form a premixed gas; and the premixed gas enters the planar water-cooled premixed burner and is uniformly distributed on surface of the planar water-cooled premixed burner, and enters the furnace through a gap between the front-wall membrane walls to be burned.

Compared to the prior art, this application has the following beneficial effects.
1. The corner tube boiler provided in this application adopts multi-mechanism coupling to enhance heat transfer and uses a hexagonal cylindrical unit with multi-mechanism coupling convection enhancement including the gap laminar flow enhancement, the gap impact jet enhancement, and the gap turbulence enhancement. Only two rows of tubes can cool the flue gas in the boiler from about 1100°C to below 300°C, and the flue gas resistance is controlled below 1500Pa, significantly reducing boiler steel consumption and floor space. Further, the number of the rows of tubes is increased to 3~5, which can reduce the temperature difference between the flue gas at the outlet and the working fluid in the furnace to less than 20°C.
2. The heterogeneous tube bundle group can be applied to boilers of various capacities between 0.1 t and 1000 t by adjusting the number of tubes per row and the number of burners according to the boiler capacity, and is easy to large-scale process, production, and assembly.
3. The steel consumption of the tube bundle of the boiler body provided herein is only 30%∼50% of the traditional corner tube boiler, which greatly reduces the steel consumption of the boiler body. The boiler occupies only 30%~50% of the traditional corner tube boiler, which reduces the area of the boiler room. The exhaust gas temperature of the boiler body is 80~100°C lower than that of the traditional corner tube boiler, which reduces the steel consumption of the economizer and energy saver.
4. The corner tube boiler can produce saturated steam and superheated steam. After installing the overhead condenser, hot water and steam can be produced, the working fluid in the furnace does not participate in the external circulation, and the working fluid is not polluted by the external environment, which reduces the risk of scaling in the tube.
5. The corner tube boiler optimizes the feed water and steam conduction in the heterogeneous tube bundle group area and the membrane wall area, enhances heat transfer of water side of the boiler, and matches the heat transfer capacity of water side with the heat transfer capacity of flue gas side.
6. The corner tube boiler adopts a combination of the energy saver, the condenser, and the condensing air preheater, which increases the efficiency of the boiler to 102% to 104%, which is much higher than the average level of 99% on the current market and reduces the carbon emissions during boiler operation. The steel consumption of the boiler body is lower than that of the traditional corner tube boiler, which reduces the material and manufacturing carbon emissions of the boiler. Compared with the existing corner tube boilers, the carbon emission of the whole life cycle of the boiler is reduced by more than 5%.

### BRIEF DESCRIPTION OF THE DRAWINGS

FIG 1a is a right-side view of a corner tube boiler according to an embodiment of the present disclosure;
FIG 1b is a top view of the corner tube boiler;
FIG 1c is a first perspective view of a body of the corner tube boiler according to an embodiment of the present disclosure;
FIG 2 is a left-section view of the body of the corner tube boiler;
FIG 3 is a second perspective view of the body of the corner tube boiler;
FIG 4a is a top-section view of the body of the corner tube boiler in the absence of a bare tube bundle according to an embodiment of the present disclosure;
FIG 4b is a top-section view of the body of the corner tube boiler in the presence of the bare tube bundle;
FIG 4c is a section view of a heterogeneous tube bundle group according to an embodiment of the present disclosure;
FIG 4d is a schematic diagram showing a flue gas flow in the heterogeneous tube bundle group;
FIG 4e is a schematic diagram of a symmetrical bi-wing longitudinal curved finned tube according to an embodiment of the present disclosure;
FIG 4f is a schematic diagram of a symmetrical bi-wing longitudinal plate finned tube according to an embodiment of the present disclosure;
FIG 5a is a section view of the corner tube boiler when a diffusion burner is used according to an embodiment of the present disclosure;
FIG 5b is a section view of the corner tube boiler when a metal fiber burner is used according to an embodiment of the present disclosure;
FIG 6a is a left-side view of the body of the corner tube boiler with an overhead condenser according to an embodiment of the present disclosure;
FIG 6b is a left-section view of the body of the corner tube boiler with the overhead condenser;
FIG 6c is a schematic diagram of a local structure when the corner tube boiler is used as a hot water boiler according to an embodiment of the present disclosure;
FIG 7 is a section view of the body of the corner tube boiler with a steam superheater according to an embodiment of the present disclosure;
FIG 8a is a section view of the body of the corner tube boiler provided with a plurality of planar water-cooled premixed burners arranged in a horizontal direction according to an embodiment of the present disclosure;
FIG 8b is a front view of the body of the corner tube boiler provided with a plurality of the planar water-cooled premixed burners arranged in a height direction and the horizontal direction according to an embodiment of the present disclosure;
FIG 8c is a side view of the body of the corner tube boiler provided with a plurality of the planar water-cooled premixed burners arranged in the height direction and the horizontal direction;
FIG 8d is a section view of the body of the corner tube boiler provided with a plurality of the planar water-cooled premixed burners arranged in bend according to an embodiment of the present disclosure;
FIG 8e is a section view of the body of the corner tube boiler provided with two rows of the planar water-cooled premixed burners facing each other according to an embodiment of the present disclosure;
FIG 8f is a side view of the body of the corner tube boiler provided with two rows of the planar water-cooled premixed burners facing each other;
FIG 9a is a section view of a rectangular-section premixer according to an embodiment of the present disclosure; and
FIG 9b is a section view of the rectangular-section premixer along a flow direction of natural gas.

### DETAILED DESCRIPTION OF EMBODIMENTS

The present disclosure will be further described in detail below in conjunction with the accompanying drawings and embodiments. Understandably, the embodiments described herein are only used to explain the relevant content, and not to limit the present disclosure. It should also be noted that, for the convenience of description, only the parts related to the present disclosure are shown in the drawings.

It should be noted that, without conflict, embodiments in the present disclosure and features in embodiments may be combined with each other. The technical solution of the present disclosure will be further described in detail below in conjunction with the accompanying drawings and embodiments.

The crosshatching and/or shading used in the drawings is often used to make boundaries between adjacent parts clear. Thus, unless otherwise noted, the presence or absence of crosshatching or shadowing does not show any preference or requirement to the specific material, material properties, dimensions, and proportions of the parts, and commonalities between the parts. Further, for clarity and/or descriptive purposes, the dimensions and relative dimensions of the components may be magnified in the drawings. When exemplary embodiments may be implemented differently, the process sequence may be performed in a different order with that described. For example, two processes successively described may be executed substantially simultaneously or in reverse order from the order described. In addition, the same reference signs represent the same parts.

When a part is "on" or "above" another part, "connected to" or "coupled to" another part, the part may be directly on another part, directly connected to, or directly coupled to another part, or an intermediate medium may be provided. However, when a part is described to be "directly on" another part, "directly connected to" or "directly coupled" to another part, indicating no intermediate medium. For this purpose, the term "connection" can refer to a physical connection, an electrical connection, etc., with or without intermediate medium.

For descriptive purposes, the relative terms may be used, such as "below", "under", "down", "on", "above", "up", "higher" and "side" (e.g., "sidewall"), to describe the relationship between one part and another (other) part as shown in the drawings. In addition to the orientation shown in the drawings, the spatial relative terms are intended to include different orientations in the use, operation and/or manufacture of the equipment. For example, if the equipment in the drawings is flipped, the part described as "under" or "below" other parts or features will be positioned "above" or "on" the other parts or features. Thus, the exemplary term "under" can contain two orientations: "above" and "under". In addition, the device may be positioned additionally (e.g., rotated 90 degrees or in other directions), so that the spatial relative terms used herein are interpreted accordingly.

In addition, the terms "first" and "second" are merely descriptive and cannot be understood as indicating or implying relative importance or implying the number of technical features indicated. Thus, the features limited to "first" or "second" may explicitly or implicitly include at least one features. In the disclosure, "a plurality of" means at least two, such as two or three unless otherwise specified.

The direction terms "front", "rear", "left", and "right" are relative to a boiler with a furnace as a center to describe, "front" refers to a direction near a burner of the boiler, "back" refers to a direction near a chimney of the boiler, "left" and "right" are both sides of the furnace.

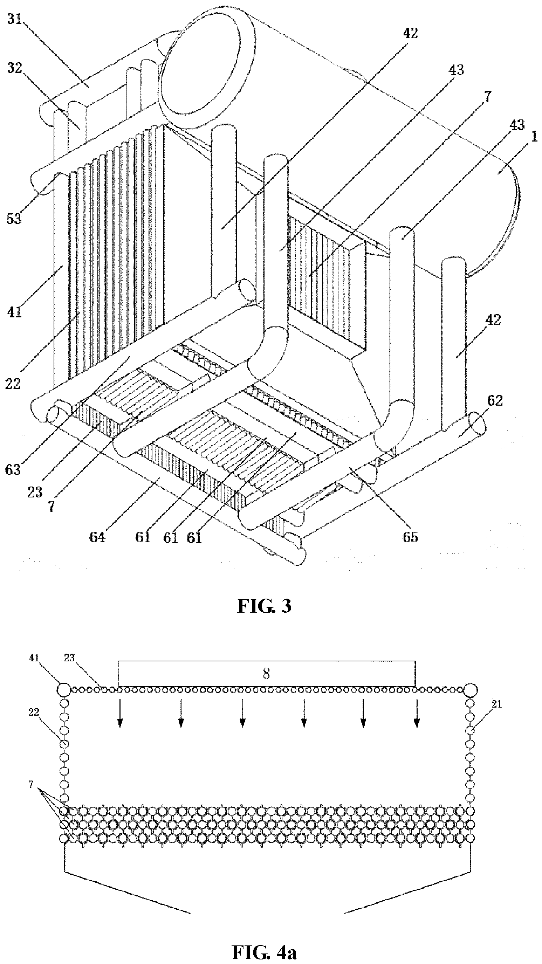

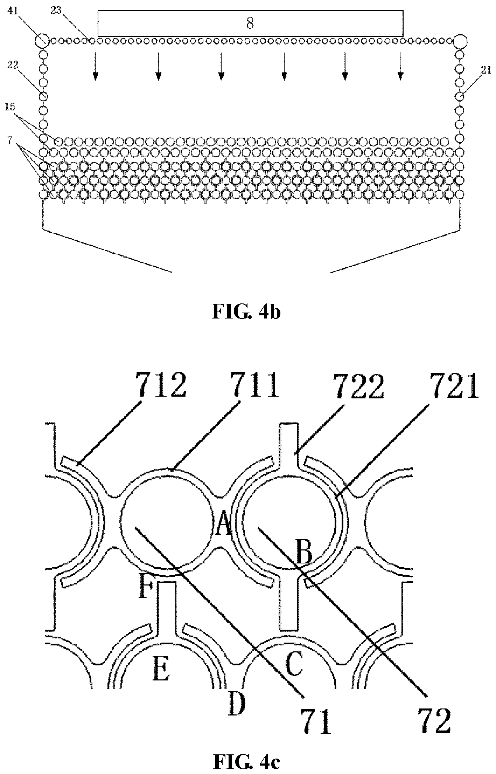

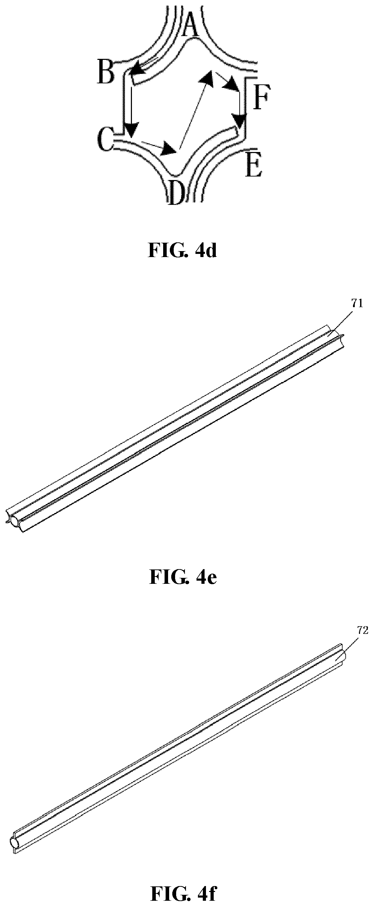

Referring to FIGs. 4b-4f, a heterogeneous tube bundle group heat transfer structure includes a plurality of symmetrical bi-wing longitudinal curved finned tubes 71 and a plurality of symmetrical bi-wing longitudinal plate finned tubes 72. Each of the plurality of symmetrical bi-wing longitudinal curved finned tubes 71 includes a first bare tube 711. The bi-wing longitudinal curved fins 712 are symmetrically provided along an axis of a vertical section of the first bare tube 711. Each of the plurality of symmetrical bi-wing longitudinal plate finned tubes 72 includes a second bare tube 721, and longitudinal flat steels 722 are symmetrically provided along an axis of a vertical section of the second bare tube 721. The plurality of symmetrical bi-wing longitudinal curved finned tubes 71 and the plurality of symmetrical bi-wing longitudinal plate finned tubes 72 are alternately arranged at least two rows. Tubes adjacent to a symmetrical bi-wing longitudinal curved finned tube 71 inside the tube bundle group are both a symmetrical bi-wing longitudinal plate finned tube 72. An end of each row of the tube bundle group is provided with the symmetrical bi-wing longitudinal curved finned tube 71 or the symmetrical bi-wing longitudinal plate finned tube 72.

In this embodiment, a diameter of the first bare tube 711 is the same as that of the second bare tube 721. The plurality of symmetrical bi-wing longitudinal curved finned tubes 71 and the plurality of symmetrical bi-wing longitudinal plate finned tubes 72 have a membrane wall structure at a bending portion and a portion connecting a header.

In this embodiment, fins of adjacent two symmetrical bi-wing longitudinal curved finned tubes 71 are configured to surround the symmetrical bi-wing longitudinal plate finned tubes 72 therebetween. A gap is provided between the symmetrical bi-wing longitudinal curved finned tubes 71 and the symmetrical bi-wing longitudinal plate finned tubes 72 adjacent thereto to be configured as a flue gas flow channel to enhance convective heat transfer. Along a flue gas flow direction, every four tubes form a hexagonal prism-shaped space, wherein the hexagonal prism-shaped space is surrounded by two longitudinal curved fin back arc segments consisting of AB segment and DE segment, two longitudinal plate fin straight segments consisting of BC segment and EF segment, and two longitudinal bare tube arc segments consisting of CD segment and FA segment; and the hexagonal prism-shaped space has a flue gas inlet and a flue gas outlet.

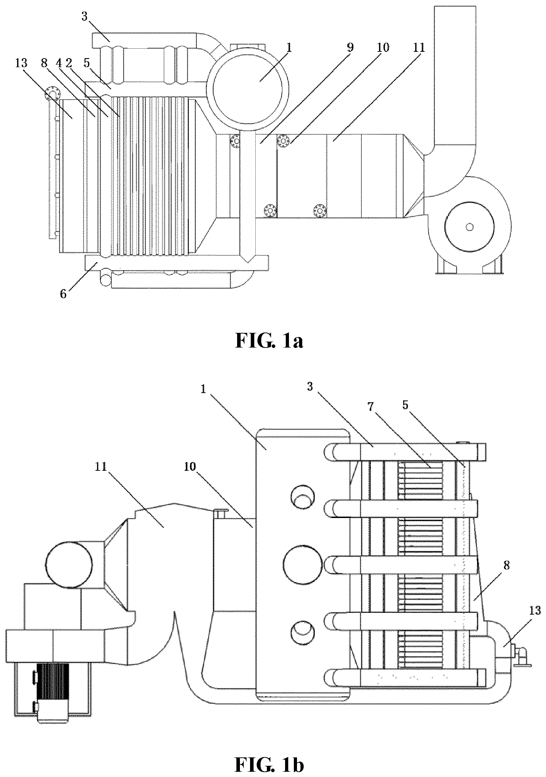

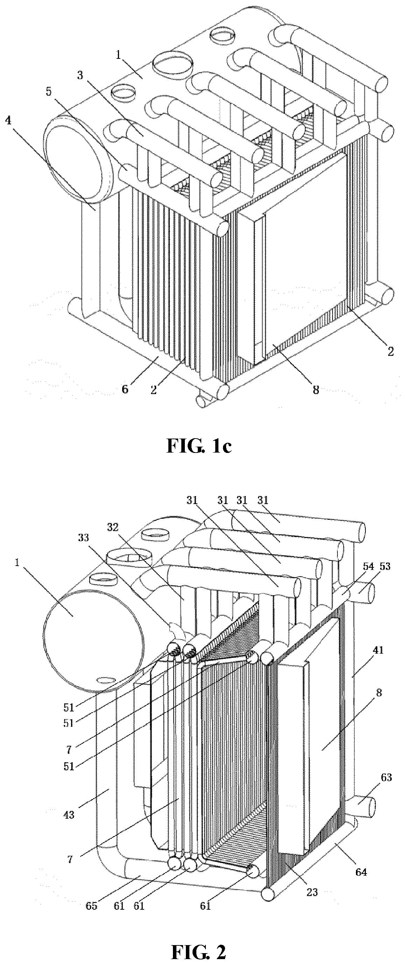

Referring to FIGs. 1a-1c, a corner tube boiler includes a boiler drum 1, a membrane wall 2, a steam guide tube 3, a downcomer 4, an upper horizontal header 5, a lower horizontal header 6, the heterogeneous tube bundle group 7, a burner, an energy saver 9, a condenser 10, a condensing air preheater 11, a steam superheater 12, and an overhead condenser 14. Two ends of the membrane wall 2 are connected to the upper horizontal header 5 and the lower horizontal header 6. The membrane wall 2 includes a left-wall membrane wall 21, a right-wall membrane wall 22, and a front-wall membrane wall 23. A centerline of the boiler drum 1 is in the same plane as a centerline of the upper horizontal header 5 and parallel to the front-wall membrane wall 23. The space enclosed by the left-wall membrane wall 21, the right-wall membrane wall 22, and the front-wall membrane wall 23 is configured as the furnace. The lower end of the steam guide tube 3 is connected to the upper end of the upper horizontal header 5, and the upper end of the steam guide tube 3 is connected to an upper part of the boiler drum 1. The upper end of the downcomer 4 is connected to the boiler drum 1 and the upper horizontal header 5, and the lower end of the downcomer 4 is connected to the lower horizontal header 6. The upper end of the heterogeneous tube bundle group 7 is connected to the upper horizontal header 5, and the lower end of the heterogeneous tube bundle group 7 is connected to the lower horizontal header 6. A row of tube bundles near the furnace is the first row of tube bundles of the heterogeneous tube bundle group 7. The first row of tube bundles of the heterogeneous tube bundle group 7 is bent. The upper ends of the first row of tube bundles of the heterogeneous tube bundle group 7 are connected to the upper header 51, and the lower ends of tube bundles of the first row of the heterogeneous tube bundle group 7 are connected to the lower header 61. Bent parts on upper and lower ends of the first row of tube bundles of the heterogeneous tube bundle group 7 act as a top-wall membrane wall and a bottom-wall membrane wall, respectively. The burner is disposed on the front-wall membrane wall 23, the left-wall membrane wall 21 or the right-wall membrane wall 22. Gas enters from left or right sides of the membrane wall 22. The energy saver 9 is located behind the heterogeneous tube bundle group 7 and below the boiler drum 1. The condenser 10 is located behind the energy saver 9. The condensing air preheater 11 is located after the condenser 10. The condenser 10 is connected to the energy saver 9, and the energy saver 9 is connected to the boiler drum 1.

### Embodiment 1

In this embodiment, a planar water-cooled premixed burner 8 is used and arranged at the front-wall membrane wall 23, as shown in FIGs. 1a-1c. The corner tube boiler includes the boiler drum 1, the membrane wall 2, the steam guide tube 3, the downcomer 4, the upper horizontal header 5, the lower horizontal header 6, the heterogeneous tube bundle group 7, the planar water-cooled premixed burner 8, the energy saver 9, the condenser 10, the condensing air preheater 11, the steam superheater 12, the rectangular-section premixer 13, and the overhead condenser 14. Two ends of the membrane wall 2 are connected to the upper horizontal header 5 and the lower horizontal header 6. The membrane wall 2 includes a left-wall membrane wall 21, a right-wall membrane wall 22, and a front-wall membrane wall 23. The centerline of the boiler drum 1 is in the same plane as the centerline of the upper horizontal header 5 and parallel to the front-wall membrane wall 23. The space enclosed by the left-wall membrane wall 21, the right-wall membrane wall 22, and the front-wall membrane wall 23 is configured as the furnace. The lower end of the steam guide tube 3 is connected to the upper end of the upper horizontal header 5, and the upper end of the steam guide tube 3 is connected to the upper part of the boiler drum 1. The upper end of the downcomer 4 is connected to the boiler drum 1 and the upper horizontal header 5, and the lower end of the downcomer 4 is connected to the lower horizontal header 6. The upper end of the heterogeneous tube bundle group 7 is connected to the upper horizontal header 5, and the lower end of the heterogeneous tube bundle group 7 is connected to the lower horizontal header 6. A row of tube bundles of the heterogeneous tube bundle group 7 near the furnace is the first row of tube bundles of the heterogeneous tube bundle group 7. The first row of tube bundles of the heterogeneous tube bundle group 7 is bent. The upper end of the first row of tube bundles of the heterogeneous tube bundle group 7 is connected to the upper header 51, and the lower end of the first row of tube bundles of the heterogeneous tube bundle group 7 is connected to the lower header 61. Bent parts on upper and lower ends of the first row of tube bundles of the heterogeneous tube bundle group 7 act as the top-wall membrane wall and the bottom-wall membrane wall, respectively. The planar water-cooled premixed burner 8 is disposed in front of the front-wall membrane wall 23, and gas enters from left or right sides. The energy saver 9 is located behind the heterogeneous tube bundle group 7 and below the boiler drum 1. The condenser 10 is located behind the energy saver 9. The condensing air preheater 11 is located after the condenser 10. The rectangular-section premixer 13 is located on the air duct connected to the planar water-cooled premixed burner 8 connecting an air side of the planar water-cooled premixed burner 8 with the condensing air preheater 11. The condenser 10 is connected to the energy saver 9, and the energy saver 9 is connected to the boiler drum 1.

Based on the above structure, the cold air supplied by a boiler fan is heated by the condensing air preheater 11 and passes through the rectangular-section premixer 13, and the natural gas is uniformly mixed in the rectangular-section premixer 13 to form a premixed gas. The premixed gas enters the planar water-cooled premixed burner 8, is uniformly distributed on the surface of the entire planar water-cooled premixed burner 8, enters the furnace to burn through the gap between the front-wall membrane walls 23, forms a gap flame at the root of the water-cooled tube bundle, and generates high-temperature flue gas. The high-temperature flue gas is cooled to below 50°C through the heterogeneous tube bundle group 7, the energy saver 9, the condenser 10, and the condensing air preheater 11 in turn, and enters the chimney to discharge to the atmosphere. The water fed by the boiler first enters the condenser 10 to condense the high-temperature flue gas, and then enters the energy saver 9 to preheat to about 100 °C into the lower part of the boiler drum 1. Along the downcomer 4 and the lower horizontal header 6 into the heterogeneous tube bundle group 7 and the lower end of the membrane wall 2, the water absorbs heat and continuously evaporates into a steam-water mixture. The steam-water mixture enters the upper horizontal header 5 for steam-water pre-separation, and the steam enters the steam space in the upper part of the boiler drum 1 through the steam guide tube 3 and leaves the boiler from the top of the boiler drum 1 in a form of saturated steam.

The steam-moisture interface in the corner tube boiler is a horizontal center surface of the boiler drum 1. If superheated steam is required, the saturated steam leaving the boiler drum 1 can enter the steam superheater 12 to continue to absorb heat and heat up into superheated steam and leave the boiler from the top of the steam superheater 12 to supply to the user. If low-temperature saturated steam or hot water is required, when the saturated steam leaves the boiler drum 1 and enters the top of the overhead condenser 14, the heat is released on the shell side of the overhead condenser 14 to form liquid water and flow back to the boiler drum 1, and other low-temperature feed water absorbs heat in the tube of the overhead condenser 14 to become low-temperature saturated steam or hot water. Or, the low-temperature saturated steam is heated into the superheated steam by the steam superheater 12.

### Embodiment 2

Differences between this embodiment (shown in FIGs. 2 and 3) and Embodiment 1 are discussed as follows.

The membrane wall 2 includes the left-wall membrane wall 21, the right-wall membrane wall 22 and the front-wall membrane wall 23. The top-wall membrane wall and the bottom-wall membrane wall are replaced by bending the first row of tube bundles of the heterogeneous tube bundle group 7 towards the front-wall membrane wall 23, respectively. The flat steel between adjacent water-cooled tubes in a water-cooled tube bundle at a position connected to front-wall membrane wall 23 and the planar water-cooled premixed burner 8 is removed to form a gap. The premixed gas enters a furnace from the gap for ignition and combustion. In order to ensure the uniformity of the gas channel on the front-wall membrane wall 23, multi-layer orifice plates are added along the direction of the tube bundle perpendicular to the front-wall membrane wall 23. The steam guide tube 3 includes a main steam guide tube 31, a branch steam guide tube 32, and an independent steam guide tube 33. One end of the main steam guide tube 31 is connected to the boiler drum 1, and the other end of the main steam guide tube 31 is closed. The branch steam guide tube 32 is arranged vertically. The lower end of the branch steam guide tube 32 is connected to the upper header 51, the upper-left header 52, the upper-right header 53 and the upper-front header 54, and the upper end of the branch steam guide tube 32 is connected to the main steam guide tube 31. A plurality of the main steam guide tubes 31 are arranged along the center line of the boiler drum 1, and each of the plurality of the main steam guide tubes 31 is connected to a plurality of the branch steam guide tubes 32 for collecting steam from the heterogeneous tube bundle group 7 and the membrane wall 2. One end of the independent steam guide tube 33 is connected to the upper header 51, the upper-left header 52, the upper-right header 53, and the upper-front header 54, and the other end of the independent steam guide tube 33 is connected to the boiler drum 1, further reducing the resistance of steam into the boiler drum 1. The downcomer 4 includes a front-wall downcomer 41, a tail downcomer 42, and a water-feeding downcomer 43. The upper end of the front-wall downcomer 41 is connected to the upper-left header 52 and the upper-right header 53. The front-wall downcomer 41 penetrates through the lower-left header 62 and the lower-right header 63, respectively. The lower end of the front-wall downcomer 41 is connected to the lower-front header 64. The upper end of the tail downcomer 42 is connected to the boiler drum 1, and the lower end of the tail downcomer 42 is connected to the lower-left header 62 and the lower-right header 63, respectively. The lower end of the water-feeding downcomer 43 is connected to the lower distribution header 65 to feed water to the heterogeneous tube bundle group 7 with strong evaporation. The lower distribution header 65 is connected to the lower header 61 and the lower-front header 64.

The upper horizontal header 5 includes the upper header 51, the upper-left header 52, the upper-right header 53, and the upper-front header 54. The upper header 51 is connected to the upper end of the heterogeneous tube bundle group 7, the upper-left header 52 is connected to the upper end of the left-wall membrane wall 21, the upper-right header 53 is connected to the upper end of the right-wall membrane wall 22, and the upper-front header 54 is connected to the upper end of the front-wall membrane wall 23. The two ends of the upper header 51 are connected to the upper-left header 52 and the upper-right header 53. The two ends of the upper-front header 54 are connected to the upper-left header 52 and the upper-right header 53. The center lines of the upper header 51, the upper-left header 52, and the upper-right header 53 are all in the same horizontal plane which is a steam-water interface of the upper header 51, the upper-left header 52, the upper-right header 53, and the upper-front header 54.

The lower horizontal header 6 includes the lower header 61, the lower-left header 62, the lower-right header 63, the lower-front header 64, and the lower distribution header 65. The lower header 61 is connected to the lower end of the heterogeneous tube bundle group 7, the lower-left header 62 is connected to the lower end of the left-wall membrane wall 21, the lower-right header 63 is connected to the lower end of the right-wall membrane wall 22, and the lower-front header 64 is connected to the lower end of the front-wall membrane wall 23. The two ends of the lower header 61 are connected to the lower-left header 62 and the lower-right header 63, respectively. The center lines of the lower header 61, the lower-left header 62, and the lower-right header 63 are in the same horizontal plane which is above center lines of the lower-front header 64 and the lower distribution header 65. The lower distribution header 65 is connected to the lower end of the tail downcomer 42, and the lower distribution header 65 and the lower header 61 are connected by a plurality of branch pipes, and the water from the water-feeding downcomer 43 is distributed to various positions of the lower header 61.

### Embodiment 3

Differences between this embodiment (shown in FIGs. 4a-4d) and Embodiments 1 and 2 are discussed as follows.

The heterogeneous tube bundle group 7 uses the symmetrical bi-wing longitudinal curved finned tube 71 and the symmetrical bi-wing longitudinal plate finned tube 72 with the same diameter arranged at intervals. Both the symmetrical bi-wing longitudinal curved finned tube 71 and the symmetrical bi-wing longitudinal plate finned tube 72 are only provided with fins in the vertical pipe section. The symmetrical bi-wing longitudinal curved finned tube 71 and the symmetrical bi-wing longitudinal plate finned tube 72 have the membrane wall structure at the bending portion and the portion connecting the upper horizontal header 5 and the lower horizontal header 6. The fins of the adjacent two symmetrical bi-wing longitudinal curved finned tubes 71 surround the symmetrical bi-wing longitudinal plate finned tube 72 therebetween. The curvature of the bi-wing longitudinal curved fin is about 130°, the thickness is 3~6 mm, and the outer diameter of the bi-wing longitudinal curved fin is 6~10 mm larger than the symmetrical bi-wing longitudinal plate finned tube 72. A gap with a width of 1~4 mm and a length of 80 mm~ 120 mm is formed between the two tubes to be configured as a flue gas flow channel to enhance convective heat transfer. Only 3 rows of heterogeneous tube bundle groups 7 can reduce the flue gas from 1100°C to less than 300°C. The symmetrical bi-wing longitudinal curved finned tubes 71 at each row of tube bundles correspond to the symmetrical bi-wing longitudinal plate finned tubes 72 on adjacent row in the front and rear directions, forming a staggered arrangement. In such a way, along a flue gas flow direction, every four tubes form a hexagonal prism-shaped space, wherein the hexagonal prism-shaped space is surrounded by two longitudinal curved fin back arc segments consisting of AB segment and DE segment, two longitudinal plate fin straight segments consisting of BC segment and EF segment, and two longitudinal bare tube arc segments consisting of CD segment and FA segment. The hexagonal prism-shaped space in dynamic operation is provided with a flue gas inlet and a flue gas outlet, and in dynamic operation, longitudinal plate fins subjected by line thermal expansion will be close to the tube wall, when the boiler stops work, due to cooling contraction, there will be a gap. The flue gas on the front of the curved fin AB segment completes the gap laminar flow enhancement heat transfer and then flows out, and the outlet flow rate can reach more than 30 m/s. The straight segment BC performs gap impact jet enhancement heat transfer, and then the arc segment CD performs gap impact jet enhancement heat transfer, and then the flue gas spreads out with turbulence enhancement heat transfer on other walls of the hexagonal prism-shaped space. Therefore, the back of the tube containing the AF segment that has no flue gas flow can also be subjected to convection enhancement heat transfer, and finally the flue gas collects at point E and enters the front of the curved fin again to complete the next gap laminar flow enhancement heat transfer process. In such an arrangement, the entire hexagonal prism-shaped space becomes a one-way flue gas heat transfer channel of multi-mechanism coupling convection enhancement including the gap laminar flow enhancement, the gap impact jet enhancement, and the gap turbulence enhancement. Two rows of bare tube bundle 15 are arranged in front of the heterogeneous tube bundle group 7 to reduce the temperature of the flue gas entering the heterogeneous tube bundle group 7.

In this embodiment, referring to FIG 4a, based on Embodiment 3, when the boiler requires a compact structure, the bare tube bundle 15 can be removed, at this time the heterogeneous tube bundle group 7 is the outlet of the furnace. An end of fins at a side near the furnace in the first row of the symmetrical bi-wing longitudinal curved finned tubes 71 and the first row of the symmetrical bi-wing longitudinal plate finned tubes 72 near the furnace are cut to reduce a length of the fins protruding into the furnace, preventing flame and high-temperature flue gas radiation from causing overheating at the end of the fin protruding into the furnace, causing local material deterioration and cracking.

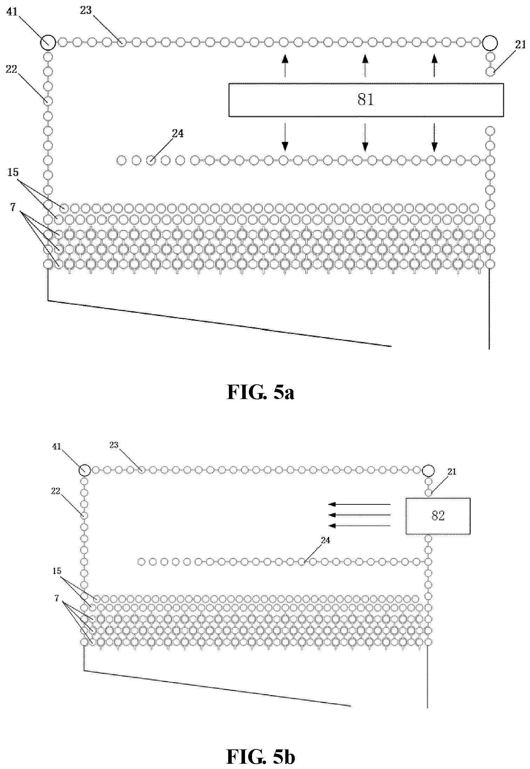

In this embodiment, referring to FIG 5a, based on Embodiment 1, in the corner tube boiler, a diffusion burner 81 is used. The diffusion burner 81 is installed on the left-wall membrane wall 21. The separation membrane wall 24 is disposed in the furnace to prevent incomplete combustion of flue gas from entering the heterogeneous tube bundle group 7 resulting in an increase of CO in the flue gas. There is no flat steel between adjacent two tubes in a tail tube bundle of the separation membrane wall 24, which increases the space for flue gas turning and makes the distribution of flue gas in the heterogeneous tube bundle group 7 more uniform. The separation membrane wall 24 is a single-row membrane water-cooled wall. The left side of the separation membrane wall 24 is connected to the left-wall membrane wall 21 through the flat steel, and the right side of the separation membrane wall 24 extends into the furnace. The upper and lower ends of the separation membrane wall 24 are connected to the upper horizontal header 5 and the lower horizontal header 6, respectively. Optionally, the tube bundles of the separation membrane wall 24 can be spaced, one tube bundle connects to the front-wall header, and another tube bundle connects to the header in the heterogeneous tube bundle area. One tube bundle connects to the upper horizontal header 5 at the front, and another tube bundle connects to the lower horizontal header 6 at the rear.

In this embodiment, referring to FIG 5b, based on Embodiment 1, in the corner tube boiler, a metal fiber burner is used. The metal fiber burner is installed on the left-wall membrane wall 21, and the separation membrane wall 24 is added to make the flue gas in the circumferential direction of the burner more uniform. There is no flat steel at the tail of the separation membrane wall 24, which increases the space for the flue gas turning, so that the flue gas in the heterogeneous tube bundle group 7 is distributed more uniformly. The separation membrane wall 24 is arranged in the same structure as in the previous embodiment. Optionally, the separation membrane wall 24 can also be removed.

The flame in the diffusion burner 81 and the various premixed burners should avoid touching the metal wall. The diffusion burner 81 and various premixed burners are arranged to avoid flame interference with each other, and the distance between the flames of multiple diffusion burners 81 and premixed burner is greater than 1 m.

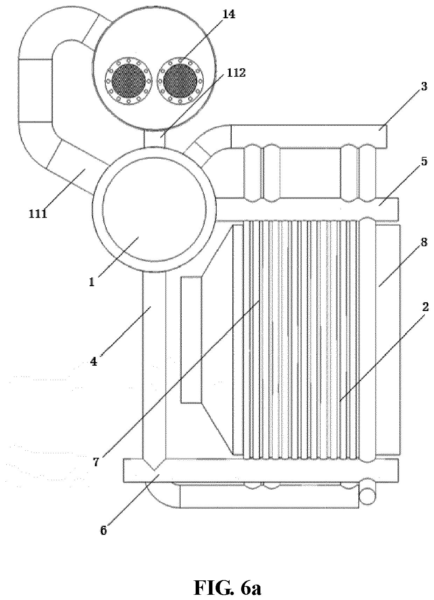

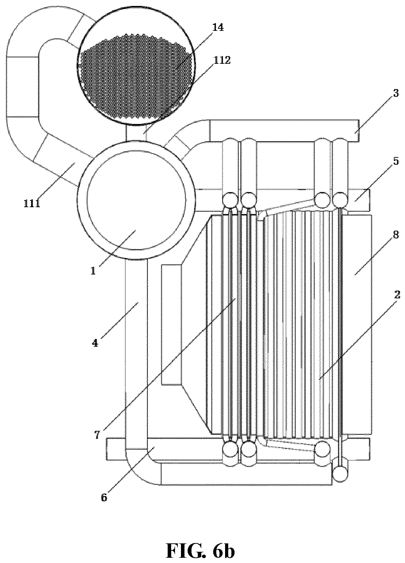

In this embodiment, referring to FIGs. 6a and 6b, based on Embodiment 1, an overhead condenser 14 is provided above the boiler drum 1. The overhead condenser 14 has a shell-and-tube structure. The inlet and outlet on the shell side of the overhead condenser 14 are respectively connected to a side steam outlet 111 of the boiler drum 1 and a top condensate inlet 112. The saturated steam from the boiler drum 1 enters the shell side of the overhead condenser 14, releases the heat to form liquid water, and flows into the boiler drum 1 through the top condensate inlet 112 at the bottom of the overhead condenser 14 under the action of gravity. The heated low-temperature water flows on the tube side of the overhead condenser 14, and the tube side of the overhead condenser 14 is set with two return trips. The low-temperature water absorbs the heat released by the saturated steam and continuously heats up, becomes high-temperature water or wet saturated steam, and leaves the overhead condenser 14. The inlet and outlet on the tube side of the overhead condenser 14 are connected to the return water of the hot user and the hot user, respectively.

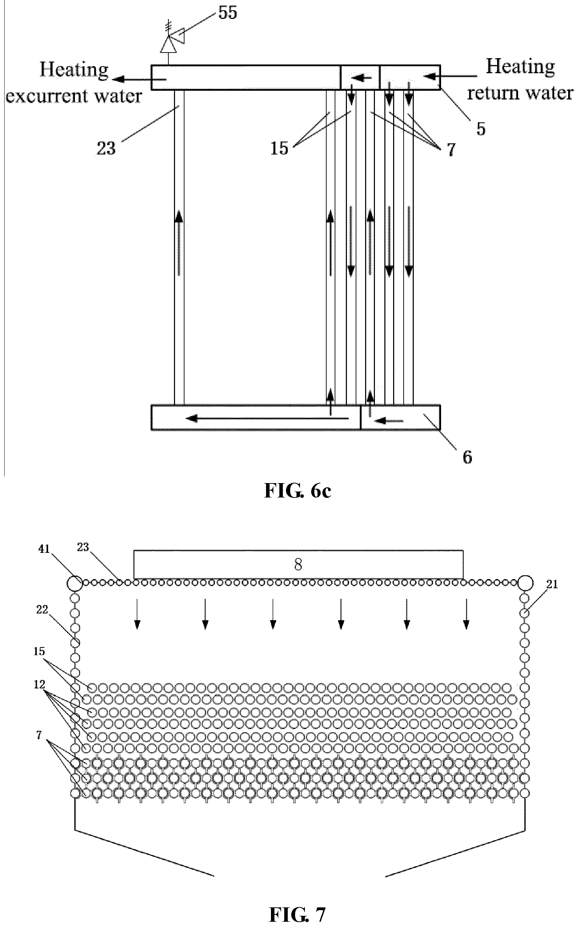

In this embodiment, referring to FIG 6c, when the heterogeneous tube bundle group 7 is used in a hot water boiler, and the boiler drum 1 and the steam guide tube 3 are disconnected by omitting or shutting off the valve. The heating return water first enters ends of the upper-left header 52 and the upper-right header 53 close to the tail end of the corner tube boiler and is assigned to the area of the upper header 51 corresponding to 2^{nd}~5^{th} rows of tube bundles in the heterogeneous tube bundle groups 7. Then, the heating return water flows down to the lower header 61 along the 2^{nd}~5^{th} rows of the tube bundles and enters the lower header 61 below the first row of the heterogeneous tube bundle group 7 along the lower-left header 62 and the lower-right header 63. Subsequently, the heating return water flows upward to the upper header 51 and enters the upper horizontal header 5 corresponding to a second row of the bare tube bundle 15 along the upper-left header 52 and the upper-right header 53. Then, the heating return water is assigned to the second row of the bare tube bundle 15, flows downwards to the lower horizontal header 6 corresponding to the second row of the bare tube bundle 15, and then enters the lower-left header 62, the lower-right header 63, and the lower-front header 64. The heating return water flows upward, along the left-wall membrane wall 21, the right-wall membrane wall 22, the front-wall membrane wall 23, and the first row of the bare tube bundle 15, to the upper horizontal header 5 and outflows from the corner tube boiler. A safety valve 55 is provided near an outlet of the upper horizontal header 5 for discharging excess steam in time in the case of stagnant flow. The design ensures that the furnace area has high heat flux density and heat transfer coefficient, both the first row of bare tube bundle 15 and the first row of heterogeneous tube bundle group 7 flow upward, and the second row of bare tube bundle 15 and 2~5 row heterogeneous tube bundles 7 have low heat transfer coefficient and flow downward, which can avoid the occurrence of supercooling and boiling phenomenon.

In this embodiment, referring to FIG 7, based on Embodiment 1, if superheated steam is required, the steam superheater 12 is provided, and the steam superheater 12 is provided between the bare tube bundle 15 and the heterogeneous tube bundle group 7. The inlet and outlet of the steam superheater 12 are located above the boiler, and the inlet of the steam superheater 12 is connected to a steam outlet of the boiler drum 1, and the outlet of the steam superheater 12 is a steam outlet of the boiler.

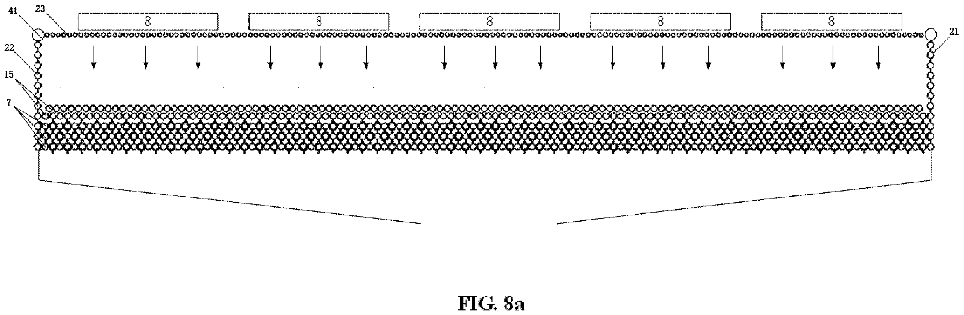

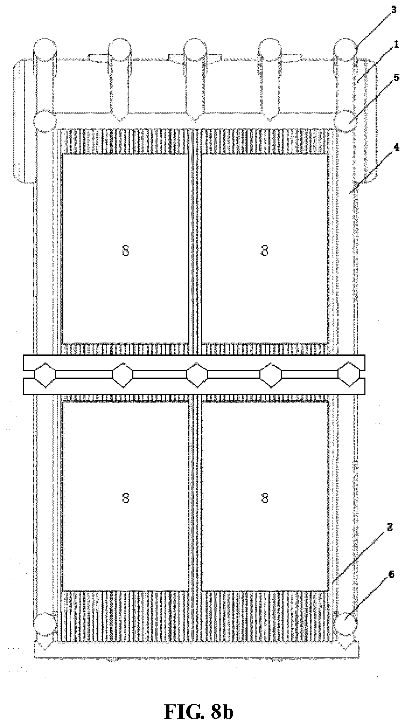

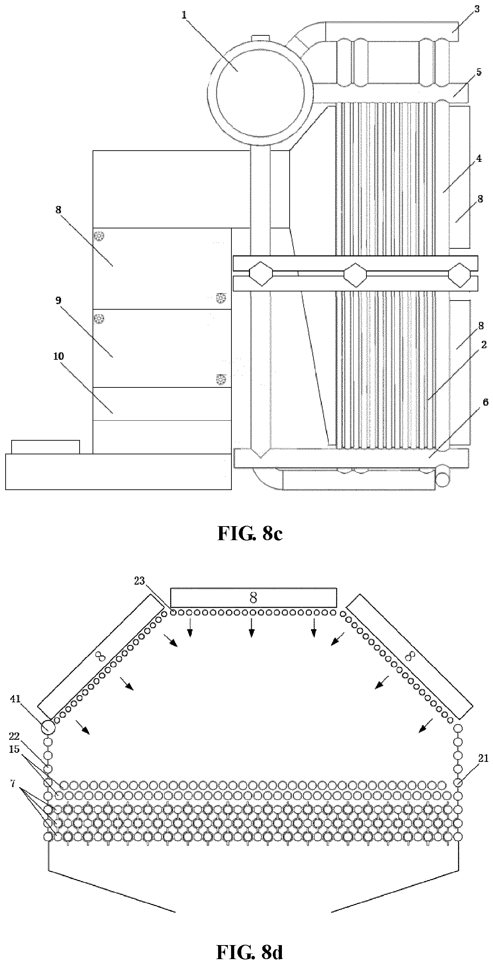

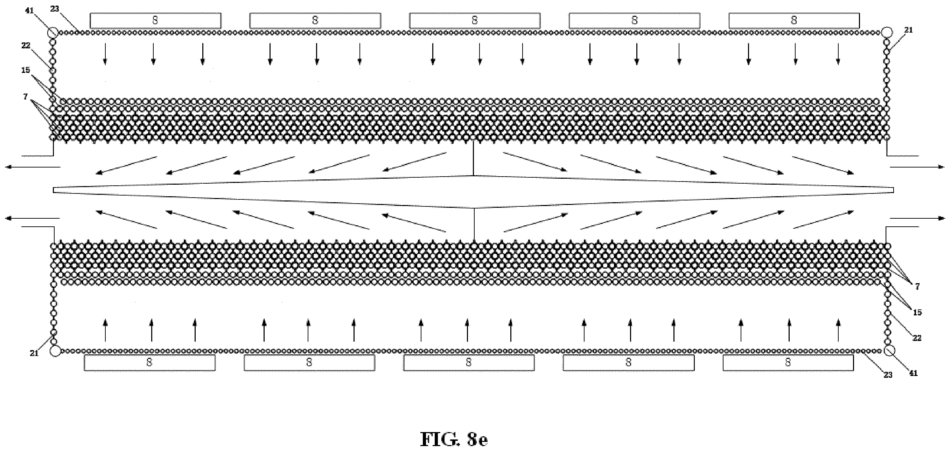

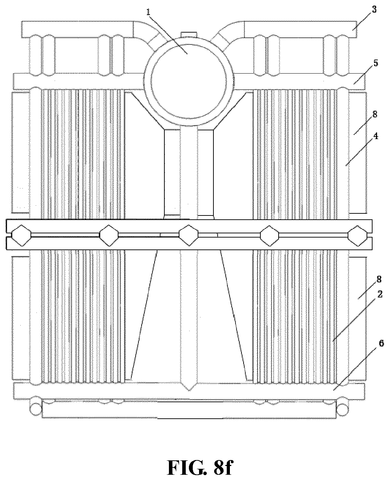

In this embodiment, referring to FIGs. 8a-8f, based on Embodiment 1, a plurality of the planar water-cooled premixed burners 8 are arranged. As shown in FIG 8a, when five planar water-cooled premixed burners 8 are arranged in a horizontal direction, the front-wall membrane wall 23, the upper-front header 54, the lower-front header 64, and the boiler drum 1 and other components arranged horizontally are extended. The number of downcomer and the steam guide tube need to be increased to ensure timely water replenishment and steam extraction. The power of the single planar water-cooled premixed burner 8 is 6 MW, and a combination with 30 MW is formed. As shown in FIGs. 8b and 8c, four planar water-cooled premixed burners 8 are arranged in the height direction and horizontal direction, and the heterogeneous tube bundle group 7, the membrane wall 2, the downcomer 4, and other components arranged vertically are elongated, the number of the downcomer and the steam guide tube are increased, the specification of the boiler drum is enlarged, and the header remains unchanged. When there is a transportation height restriction, the boiler is separated from the middle of the boiler in the height direction. The bottom of the upper part and the top of the lower part are set with headers, and the headers on the bottom of the upper part and the top of the lower part are connected by 180° bending portions. The energy saver 9, the condenser 10, and the condensing air preheater 11 are arranged sequentially from top to bottom, and the power of the single planar water-cooled premixed burner 8 is 6MW to form a 24MW combination. As shown in FIG 8d, when three planar water-cooled premixed burners 8 are arranged horizontally, the upper-front header 54, the lower-front header 64 and the front-wall membrane wall 23 are bent, so that the three planar water-cooled premixed burners 8 are arranged at a set angle to shorten the width of the boiler. The power of the single planar water-cooled premixed burner 8 is 6MW, and an 18MW combination is formed. As shown in FIGs. 8e and 8f, multiple planar water-cooled premixed burners 8 can be arranged in two rows in the horizontal direction and in two layers in the height direction. At this time, two rows of the planar water-cooled premixed burners 8 are arranged opposite to each other, and each row of five planar water-cooled premixed burners 8 is provided with the corresponding membrane wall 2, the steam guide tube 3, the downcomer 4, the upper horizontal header 5, the lower horizontal header 6, the heterogeneous tube bundle group 7. Two rows and two layers of 20 planar water-cooled premixed burners 8 share the boiler drum 1, the energy saver 9, the condenser 10, the condensing air preheater 11, and the boiler drum 1. According to the flue gas volume, the sizes of the energy saver 9, the condenser 10, and the condensing air preheater 11 are designed. The power of each planar water-cooled premixed burner 8 is 6MW, and the power of 20 sets of combinations can reach 120MW. The number of the planar water-cooled premixed burners 8 and the length and width of each component are adjusted to realize the power of 0.1MW-300MW.

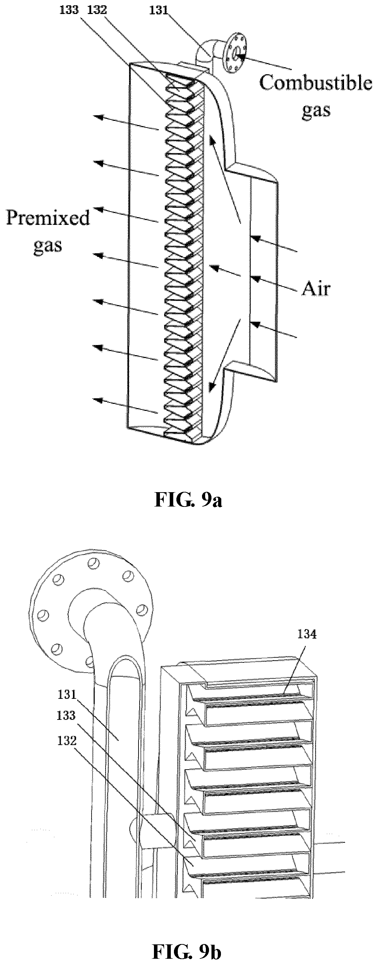

As shown in FIGs. 9a and 9b, the rectangular-section premixer 13 includes a combustible gas distribution pipeline 131, a plurality of combustible gas spaces 132 arranged in parallel, a converging-diverging channel 133, and a combustible gas hole 134. The combustible gas hole 134 is distributed in the narrowest position of the converging-diverging channel 133, and the pressure of the combustible gas is higher than the air. The combustible gas will be ejected into the air through the combustible gas hole 134. The combustible gas enters the plurality of the combustible gas spaces 132 through the combustible gas distribution pipeline 131 and enters the air space through the combustible gas hole 134. The air is first accelerated and then decelerated through the converging-diverging channel 133, and evenly mixes with the combustible gas. The resistance at the air side is controlled at 500 Pa~1000 Pa, so that the air flow in each converging-diverging channel 133 is evenly distributed. The resistance at the combustible gas side is controlled at 3000 Pa~8000 Pa to ensure that the flow rate of the combustible gas ejected in each combustible gas hole 134 is the same, to achieve uniform mixing of air and combustible gas.

## Claims

1. A heterogeneous tube bundle group heat transfer structure, comprising:
a plurality of symmetrical bi-wing longitudinal curved finned tubes (71); and
a plurality of symmetrical bi-wing longitudinal plate finned tubes (72);
**characterized in that** each of the plurality of symmetrical bi-wing longitudinal curved finned tubes (71) comprises a first bare tube (711), and bi-wing longitudinal curved fins (712) are symmetrically provided along an axis of a vertical section of the first bare tube (711);
each of the plurality of symmetrical bi-wing longitudinal plate finned tubes (72) comprises a second bare tube (721), and longitudinal flat steels (722) are symmetrically provided along an axis of a vertical section of the second bare tube (721);
the plurality of symmetrical bi-wing longitudinal curved finned tubes (71) and the plurality of symmetrical bi-wing longitudinal plate finned tubes (72) are alternately arranged in at least two rows; tubes adjacent to a symmetrical bi-wing longitudinal curved finned tube (71) inside a tube bundle group are both a symmetrical bi-wing longitudinal plate finned tube (72); and an end of each row of the tube bundle group is provided with the symmetrical bi-wing longitudinal curved finned tube (71) or the symmetrical bi-wing longitudinal plate finned tube (72); and
fins of adjacent two symmetrical bi-wing longitudinal curved finned tubes (71) are configured to surround the symmetrical bi-wing longitudinal plate finned tubes (72) therebetween; a gap is provided between a symmetrical bi-wing longitudinal curved finned tube (71) and a symmetrical bi-wing longitudinal plate finned tube (72) adjacent thereto to be configured as a flue gas flow channel to enhance convective heat transfer; along a flue gas flow direction, every four tubes form a hexagonal prism-shaped space, wherein the hexagonal prism-shaped space is surrounded by two longitudinal curved fin back arc segments consisting of AB segment and DE segment, two longitudinal plate fin straight segments consisting of BC segment and EF segment, and two longitudinal bare tube arc segments consisting of CD segment and FA segment; and the hexagonal prism-shaped space has a flue gas inlet and a flue gas outlet.

2. The heterogeneous tube bundle group heat transfer structure according to claim 1, **characterized in that** a diameter of the first bare tube (711) is the same as that of the second bare tube (721); and the plurality of symmetrical bi-wing longitudinal curved finned tubes (71) and the plurality of symmetrical bi-wing longitudinal plate finned tubes (72) have a membrane wall structure at a bending portion and a portion connected to a header.

3. The heterogeneous tube bundle group heat transfer structure according to claim 1, **characterized in that** each of the plurality of symmetrical bi-wing longitudinal curved finned tubes (71) is formed by integral rolling, continuous casting and rolling or forging, or by welding a round tube to the first bare tube (711) and cutting; and each of the plurality of symmetrical bi-wing longitudinal plate finned tubes (72) is formed by integral rolling, continuous casting and rolling or forging, or by welding the longitudinal flat steel (722) to the second bare tube (721) by double-sided full penetration welding.

4. A corner tube boiler, comprising:
a boiler drum (1);
a membrane wall (2);
a steam guide tube (3);
a downcomer (4);
an upper horizontal header (5);
a lower horizontal header (6);
a burner;
an energy saver (9);
a condenser (10); a condensing air preheater (11); and
a heterogeneous tube bundle group (7);
**characterized in that** the heterogeneous tube bundle group (7) is the heterogeneous tube bundle group heat transfer structure according to any one of claims 1-3;
a space enclosed by the membrane wall (2) is configured as a furnace; the upper horizontal header (5) and the lower horizontal header (6) are provided correspondingly on top and bottom ends of the furnace; the heterogeneous tube bundle group (7) is provided in a flue gas exhaust direction of the furnace; and a center line of the boiler drum (1) is in the same plane as a center line of the upper horizontal header (5), and is parallel to a front-wall membrane wall (23);
two ends of the membrane wall (2) are connected to the upper horizontal header (5) and the lower horizontal header (6), respectively; a lower end of the steam guide tube (3) is connected to the upper horizontal header (5), and an upper end of the steam guide tube (3) is connected to an upper part of the boiler drum (1); an upper end of the downcomer (4) is connected to the boiler drum (1) and the upper horizontal header (5), and a lower end of the downcomer (4) is connected to the lower horizontal header (6); an upper end of the heterogeneous tube bundle group (7) is connected to the upper horizontal header (5), and a lower end of the heterogeneous tube bundle group (7) is connected to the lower horizontal header (6); the heterogeneous tube bundle group (7), the energy saver (9), the condenser (10), and the condensing air preheater (11) are arranged sequentially along a flue gas flow direction; and the energy saver (9) is located below the boiler drum (1); and
the membrane wall (2) comprises a left-wall membrane wall (21), a right-wall membrane wall (22), and the front-wall membrane wall (23); a first row of tube bundles of the heterogeneous tube bundle group (7) is configured to bend towards the front-wall membrane wall (23) to form a top-wall membrane wall and a bottom-wall membrane wall; and the burner is provided on the left-wall membrane wall (21), the right-wall membrane wall (22) or the front-wall membrane wall (23).

5. The corner tube boiler according to claim 4, **characterized in that** an overhead condenser (14) is provided above the boiler drum (1); the overhead condenser (14) has a shell-and-tube structure; a tube side of the overhead condenser (14) is fed with cooling water, and an outflow from an outlet on the tube side of the overhead condenser (14) is high-temperature water or wet saturated steam; an inlet on the shell side of the overhead condenser (14) is connected to a steam outlet of the boiler drum (1), and an outlet on the shell side of the overhead condenser (14) is connected to a top inlet of the boiler drum (1); and the number of passes on the tube side is 1~4.

6. The corner tube boiler according to claim 4, **characterized in that** 1~6 rows of bare tube bundles (15) are arranged in front of the heterogeneous tube bundle group (7) to reduce a temperature of a flue gas entering the heterogeneous tube bundle group (7); and regarding a row of symmetrical bi-wing longitudinal curved finned tubes (71) closest to the furnace and a row of symmetrical bi-wing longitudinal plate finned tubes (72) closest to the furnace, an end of fins at a side close to the furnace is cut to reduce a length of the fins extending into the furnace.

7. The corner tube boiler according to claim 4, further comprising:
a steam superheater (12);
**characterized in that** the steam superheater (12) is provided in front of the heterogeneous tube bundle group (7); and an inlet of the steam superheater (12) is connected to a saturated steam outlet of the boiler drum (1) or the outlet on the tube side of the overhead condenser (14).

8. The corner tube boiler according to claim 4, **characterized in that** the upper horizontal header (5) comprises an upper header (51), an upper-left header (52), an upper-right header (53), and an upper-front header (54);
the upper header (51) is connected to the upper end of the heterogeneous tube bundle group (7); the upper-left header (52) is connected to an upper end of the left-wall membrane wall (21); the upper-right header (53) is connected to an upper end of the right-wall membrane wall (22); and the upper-front header (54) is connected to an upper end of the front-wall membrane wall (23); and
ends of the upper header (51) are connected to the upper-left header (52) and the upper-right header (53), respectively; ends of the upper-front header (54) are connected to the upper-left header (52) and the upper-right header (53), respectively; and center lines of the upper header (51), the upper-left header (52), and the upper-right header (53) are all in the same horizontal plane which is a steam-water interface of the upper header (51), the upper-left header (52), the upper-right header (53) , and the upper-front header (54).

9. The corner tube boiler according to claim 4, **characterized in that** the burner is a planar water-cooled premixed burner (8), a diffusion burner (81), or a premixed burner; wherein the premixed burner is a metal fiber burner, a porous ceramic burner, a ceramic plate burner or a perforated metal plate burner;
when the planar water-cooled premixed burner (8) is used, the planar water-cooled premixed burner (8) is arranged on a front wall of the furnace; a flat steel between adjacent water-cooled tubes in a water-cooled tube bundle at a position on the front wall of the furnace where the planar water-cooled premixed burner (8) is provided is removed to form a gap; and a rectangular-section premixer (13) is arranged on an air duct connecting an air side of the planar water-cooled premixed burner (8) with the condensing air preheater (11);
when the diffusion burner (81) is used, the diffusion burner (81) is installed on the left-wall membrane wall (21) or the right-wall membrane wall (22); a separation membrane wall (24) is provided in the furnace; the separation membrane wall (24) is a single-row membrane water-cooled wall; a left side of the separation membrane wall (24) is connected to the left-wall membrane wall (21) through a flat steel, and a right side of the separation membrane wall (24) extends into the furnace; no flat steel is provided between adjacent two tubes in a tail tube bundle of the separation membrane wall (24); and upper and lower ends of the separation membrane wall (24) are connected to the upper horizontal header (5) and the lower horizontal header (6), respectively; and
when the premixed burner is used, and the premixed burner is provided on the left-wall membrane wall (21), the right-wall membrane wall (22) or the front-wall membrane wall (23).

10. The corner tube boiler according to claim 8, **characterized in that** the steam guide tube (3) comprises a main steam guide tube (31), a branch steam guide tube (32), and an independent steam guide tube (33);
one end of the main steam guide tube (31) is connected to the boiler drum (1), and the other end of the main steam guide tube (31) is closed; one end of the branch steam guide tube (32) is connected to the upper header (51), the upper-left header (52), the upper-right header (53), and the upper-front header (54), and the other end of the branch steam guide tube (32) is connected to the main steam guide tube (31); a plurality of main steam guide tubes (31) are arranged along the center line of the boiler drum (1), and each of the plurality of main steam guide tubes (31) is connected to a plurality of branch steam guide tubes (32) for collecting steam from the heterogeneous tube bundle group (7) and the membrane wall (2); and one end of the independent steam guide tube (33) is connected to the upper header (51), the upper-left header (52), the upper-right header (53), and the upper-front header (54), and the other end of the independent steam guide tube (33) is connected to the boiler drum (1).

11. The corner tube boiler according to claim 10, **characterized in that** the lower horizontal header (6) comprises a lower header (61), a lower-left header (62), a lower-right header (63), a lower-front header (64), and a lower distribution header (65);
the lower header (61) is connected to the lower end of the heterogeneous tube bundle group (7); the lower-left header (62) is connected to a lower end of the left-wall membrane wall (21); the lower-right header (63) is connected to a lower end of the right-wall membrane wall (22); and the lower-front header (64) is connected to a lower end of the front-wall membrane wall (23);
ends of the lower header (61) are connected to the lower-left header (62) and the lower-right header (63), respectively; center lines of the lower header (61), the lower-left header (62), and the lower-right header (63) are located in the same horizontal plane which is above center lines of the lower-front header (64) and the lower distribution header (65); and the lower distribution header (65) is connected to the lower end of the downcomer (4), and the lower distribution header (65) and the lower header (61) are connected by a plurality of branch pipes;
the downcomer (4) comprises a front-wall downcomer (41), a tail downcomer (42), and a water-feeding downcomer (43), wherein the water-feeding downcomer (43) is provided in the heterogeneous tube bundle group (7); and
an upper end of the front-wall downcomer (41) is connected to the upper-left header (52) and the upper-right header (53); the front-wall downcomer (41) penetrates through the lower-left header (62) and the lower-right header (63), and a lower end of the front-wall downcomer (41) is connected to the lower-front header (64); an upper end of the tail downcomer (42) is connected to the boiler drum (1), and a lower end of the tail downcomer (42) is connected to the lower-left header (62) and the lower-right header (63); and a lower end of the water-feeding downcomer (43) is connected to the lower distribution header (65) for feeding water to the heterogeneous tube bundle group (7).

12. The corner tube boiler according to claim 11, **characterized in that** when the steam guide tube (3) is disconnected from the boiler drum (1), the corner tube boiler acts as a hot water boiler; heating return water first enters ends of the upper-left header (52) and the upper-right header (53) close to a tail end of the corner tube boiler, and is fed to an area of the upper header (51) corresponding to 2^{nd}~5^{th} rows of tube bundles in the heterogeneous tube bundle group (7); the heating return water flows down to the lower header (61) along the 2^{nd}~5^{th} rows of tube bundles, enters the lower header (61) below a first row of the heterogeneous tube bundle group (7) along the lower-left header (62) and the lower-right header (63), flows upward to the upper header (51), and enters the upper horizontal header (5) corresponding to a second row of the bare tube bundle (15) along the upper-left header (52) and the upper-right header (53) to be distributed; the heating return water flows downwards to the lower horizontal header (6) corresponding to the second row of the bare tube bundle (15), enters the lower-left header (62), the lower-right header (63), and the lower-front header (64), and then flows upward to the upper horizontal header along the left-wall membrane wall (21), the right-wall membrane wall (22), the front-wall membrane wall (23), and a first row of the bare tube bundle (15) and leaves the corner tube boiler; and
a safety valve (55) is provided near an outlet of the upper horizontal header (5) for discharging excess steam in time in the case of stagnant flow.

13. The corner tube boiler according to according to any one of claims 4-11, **characterized in that** when the burner is the planar water-cooled premixed burner (8), the rectangular-section premixer (13) is provided at a diverging section of the air duct connecting the planar water-cooled premixed burner (8) with the air side of the condensing air preheater (11);
the rectangular-section premixer (13) comprises a combustible gas distribution pipeline (131) and a plurality of combustible gas spaces (132) arranged in parallel; and the plurality of combustible gas spaces (132) are communicated with the combustible gas distribution pipeline (131); and
each of the plurality of combustible gas spaces (132) is provided with a converging-diverging channel (133); a combustible gas hole (134) is provided at a narrowest position of the converging-diverging channel (133); a combustible gas enters the plurality of combustible gas spaces (132) through the combustible gas distribution pipeline (131) and then enters an air space through the combustible gas hole (134); and air is first accelerated and then decelerated through the converging-diverging channel (133), and evenly mixes with the combustible gas, wherein the combustible gas comprises natural gas, hydrogen or a natural gas-hydrogen mixture.

14. The corner tube boiler according to claim 13, **characterized in that** the membrane wall (2) is provided with a plurality of planar water-cooled premixed burners (8) which are arranged in a height direction and/or a horizontal direction;
when the plurality of planar water-cooled premixed burners (8) are arranged in the horizontal direction, the front-wall membrane wall (23), the upper header (51), the upper-front header (54), the lower-front header (64) and the boiler drum (1) are extended; and
when the plurality of planar water-cooled premixed burners (8) are arranged in the height direction, the heterogeneous tube bundle group (7), the membrane wall (2) and the downcomer (4) are elongated, and the boiler drum (1) is enlarged, and the energy saver (9), the condenser (10) and the condensing air preheater (11) are arranged in the height direction.

15. The corner tube boiler according to claim 14, **characterized in that** when the plurality of planar water-cooled premixed burners (8) are arranged in the height direction, the corner tube boiler is divided from a middle thereof in the height direction into an upper part and a lower part; a bottom of the upper part and a top of the lower part are respectively provided with a header; and the header on the bottom of the upper part and the header on the top of the lower part are connected through a 180° bending portion.

16. The corner tube boiler according to claim 14, **characterized in that** when the plurality of planar water-cooled premixed burners (8) are arranged in the horizontal direction, the upper-front header (54) and the lower-front header (64) are bent towards a rear of the furnace, so that the plurality of planar water-cooled premixed burners (8) are arranged at a set angle; and the front-wall membrane wall (23) is bent towards the rear of the furnace at the set angle.

17. The corner tube boiler according to claim 14, **characterized in that** the plurality of planar water-cooled premixed burners (8) are arranged in two rows in the horizontal direction, the two rows of planar water-cooled premixed burners (8) are arranged opposite to each other; each row of planar water-cooled premixed burners (8) is provided with the membrane wall (2), the steam guide tube (3), the downcomer (4), the upper horizontal header (5), the lower horizontal header (6) and the heterogeneous tube bundle group (7); and the two rows of planar water-cooled premixed burners (8) share the boiler drum (1), the energy saver (9), the condenser (10) and the condensing air preheater (11).

18. The corner tube boiler according to claim 17, **characterized in that** the plurality of planar water-cooled premixed burners (8) are arranged along the horizontal and height directions at the same time.

19. An operation method of the corner tube boiler according to any one of claims 9 and 13-17, comprising:
supplying cold air by a boiler fan; heating the cold air by the condensing air preheater (11) followed by feeding to the rectangular-section premixer (13); feeding the combustible gas to the furnace to be burned, so as to form a slit flame at a root of a water-cooled tube bundle and generate high-temperature flue gas; and allow the high-temperature flue gas to sequentially pass through the heterogeneous tube bundle group (7), the energy saver (9), the condenser (10), and the condensing air preheater (11) to be cooled to 50°C or below followed by discharge through a chimney; and
allowing feeding water to enter the condenser (10) to condense the flue gas and then enter the energy saver (9) to be preheated to 100 °C to enter a lower part of the boiler drum (1); distributing evenly the feeding water along the downcomer (4) and the lower horizontal header (6) to lower ends of the heterogeneous tube bundle group (7) and the membrane wall (2) to make the feed water absorb heat and continuously evaporate to form a steam-water mixture; allowing the steam-water mixture to enter the upper horizontal header (5) for steam-water pre-separation, wherein the steam is allowed to enter a steam space in an upper part of the boiler drum (1) through the steam guide tube (3) and to leave the corner tube boiler from a top of the boiler drum (1) in a form of saturated steam; and a steam-water interface in the corner tube boiler is located on a horizontal center plane of the boiler drum (1).

20. The operation method according to claim 19, further comprising:
if superheated steam is required, allowing the saturated steam leaving the boiler drum (1) to enter a steam superheater (12) to continue to absorb heat to form the superheated steam; and supplying the superheated steam from a top of the steam superheater (12) to users.

21. The operation method according to claim 19, further comprising:
if low-temperature saturated steam or hot water is required, after the saturated steam leaves the boiler drum (1) and enters a top of the overhead condenser (14), allowing the saturated steam to release heat on the shell side of the overhead condenser (14) to form liquid water and allowing the liquid water to flow back to the boiler drum (1); and allowing low-temperature feed water to absorb heat at the tube side of the overhead condenser (14) to form the low-temperature saturated steam or hot water.

22. The operation method according to claim 19, **characterized in that** the saturated steam from the boiler drum (1) enters the shell side of the overhead condenser (14), releases heat to form liquid water, and flows into the boiler drum (1) along a pipe at a bottom of the overhead condenser (14) under an action of gravity; heated low-temperature water flows along the tube side of the overhead condenser (14), and absorbs the heat released by the saturated steam to form high-temperature water above 110 °C or wet saturated steam to leave the overhead condenser (14); and
if hot water is produced, the corner tube boiler is operated at a micro positive pressure or a vacuum negative pressure to produce hot water no more than 110°C or 85°C.

23. The operation method according to claim 19, **characterized in that** when the planar water-cooled premixed burner (8) is used, natural gas is uniformly introduced in the rectangular-section premixer (13) to form a premixed gas; and the premixed gas enters the planar water-cooled premixed burner (8) and is uniformly distributed on surface of the planar water-cooled premixed burner (8), and enters the furnace through a gap between the front-wall membrane walls (23) to be burned.

## Patentansprüche

1. Wärmeübertragungsstruktur mit heterogenen Rohrbündelgruppen, umfassend:
eine Vielzahl von symmetrisch zweiflügeligen längsgekrümmten Rippenrohren (71); und
eine Vielzahl von symmetrisch zweiflügeligen längsgeflachten Rippenrohren (72);
**dadurch gekennzeichnet, dass** jedes der Vielzahl von symmetrisch zweiflügeligen längsgekrümmten Rippenrohre (71) ein erstes Blankrohr (711) umfasst, wobei die zweiflügelige, längsgekrümmte Rippen (712) symmetrisch entlang einer Achse eines vertikalen Abschnitts des ersten Blankrohrs (711) vorgesehen sind;
wobei jedes der Vielzahl von symmetrisch zweiflügeligen längsgeflachten Rippenrohre (72) ein zweites Blankrohr umfasst (721), wobei die längsgeflachte Stähle (722) symmetrisch entlang einer Achse eines vertikalen Abschnitts des zweiten Blankrohrs (721) vorgesehen sind;
wobei die Vielzahl von symmetrisch zweiflügeligen längsgekrümmten Rippenrohre (71) und die Vielzahl von symmetrisch zweiflügeligen längsgeflachten Rippenrohre (72) abwechselnd in mindestens zwei Reihen angeordnet sind; wobei Rohre, die an ein symmetrisch zweiflügeliges längsgekrümmtes Rippenrohr (71) innerhalb einer Rohrbündelgruppe angrenzen, beide ein symmetrisch zweiflügeligen längsgeflachten Rippenrohr (72) sind; und wobei ein Ende jeder Reihe der Rohrbündelgruppe mit dem symmetrisch zweiflügeligen längsgekrümmten Rippenrohr (71) oder dem symmetrisch zweiflügeligen längsgeflachten Rippenrohr (72) versehen ist; und
wobei die Rippen von zwei benachbarten symmetrisch zweiflügeligen längsgekrümmten Rippenrohren (71) so konfiguriert, dass sie die symmetrisch zweiflügeligen längsgeflachten Rippenrohre (72) dazwischen umgeben; ein Spalt ist zwischen einem symmetrisch zweiflügeligen längsgekrümmten Rippenrohr (71) und einem daran angrenzenden, symmetrisch zweiflügeligen längsgeflachten Rippenrohr (72) vorgesehen, der als Rauchgasströmungskanal konfiguriert ist, um die konvektive Wärmeübertragung zu verbessern; entlang einer Rauchgasströmungsrichtung alle vier Rohre einen sechseckigen prismenförmigen Raum bilden, wobei der sechseckige prismenförmige Raum von zwei längsgekrümmten Rippenrückseiten-Bogensegmenten, bestehend aus einem AB-Segment und einem DE-Segment, zwei längsgeflachten Rippen-Geradenegmenten, bestehend aus einem BC-Segment und einem EF-Segment, und zwei länglichen Blankrohr-Bogensegmenten, bestehend aus einem CD-Segment und einem FA-Segment, umgeben ist; und der sechseckige prismenförmige Raum einen Rauchgaseinlass und einen Rauchgasauslass aufweist.

2. Wärmeübertragungsstruktur mit heterogenen Rohrbündelgruppen nach Anspruch 1, **dadurch gekennzeichnet, dass** der Durchmesser des ersten Blankrohrs (711) gleich wie der des zweiten Blankrohrs (721) ist; wobei die Vielzahl von symmetrisch zweiflügeligen längsgekrümmten Rippenrohre und der Vielzahl von symmetrisch zweiflügeligen längsgeflachten Rippenrohre eine Membranwandstruktur an einem Biegeabschnitt und einem mit einem Sammler verbundenen Abschnitt aufweisen.

3. Wärmeübertragungsstruktur mit heterogenen Rohrbündelgruppen nach Anspruch 1, **dadurch gekennzeichnet, dass** jedes der Vielzahl von symmetrisch zweiflügeligen längsgekrümmten Rippenrohren (71) durch integrales Walzen, Stranggießen und Walzen oder Schmieden oder durch Anschweißen eines Rundrohrs an das erste Blankrohr (711) und Schneiden gebildet wird; und dass jedes der Vielzahl von symmetrisch zweiflügeligen längsgeflachten Rippenrohre (72) durch integrales Walzen, Stranggießen und Walzen oder Schmieden oder durch Anschweißen des längsgeflachten Stahls (722) an das zweite Blankrohr (721) durch beidseitiges Volldurchschweißen gebildet wird.

4. Eckrohrkessel, umfassend:
eine Kesseltrommel (1);
eine Membranwand (2);
ein Dampfleitrohr (3);
ein Fallrohr (4);
einen oberen horizontalen Sammler (5);
einen unteren horizontalen Sammler (6);
einen Brenner;
einen Energiesparer (9);
einen Kondensator (10); einen Kondensationsluftvorwärmer (11); und
eine heterogene Rohrbündelgruppe (7);
**dadurch gekennzeichnet, dass** die heterogene Rohrbündelgruppe (7) die Wärmeübertragungsstruktur mit heterogenen Rohrbündelgruppen nach einem der Ansprüche 1 bis 3 ist;
wobei ein von der Membranwand (2) umschlossener Raum als Feuerung ausgebildet ist; wobei der obere horizontale Sammler (5) und der untere horizontale Sammler (6) entsprechend am oberen und unteren Ende der Feuerung vorgesehen sind; und wobei die heterogene Rohrbündelgruppe (7) in einer Rauchgasabzugsrichtung der Feuerung vorgesehen ist; und wobei eine Mittellinie der Kesseltrommel (1) in der gleichen Ebene wie eine Mittellinie des oberen horizontalen Sammlers (5) liegt und parallel zu einer vorderen Membranwand (23) ist;
wobei zwei Enden der Membranwand (2) mit dem oberen horizontalen Sammler (5) bzw. dem unteren horizontalen Sammler (6) verbunden sind; wobei ein unteres Ende des Dampfleitrohrs (3) mit dem oberen horizontalen Sammler (5) verbunden ist und ein oberes Ende des Dampfleitrohrs (3) mit einem oberen Teil der Kesseltrommel (1) verbunden ist; wobei ein oberes Ende des Fallrohrs (4) mit der Kesseltrommel (1) und dem oberen horizontalen Sammler (5) verbunden ist und ein unteres Ende des Fallrohrs (4) mit dem unteren horizontalen Sammler (6) verbunden ist; ein oberes Ende der heterogenen Rohrbündelgruppe (7) ist mit dem oberen horizontalen Sammler (5) verbunden und ein unteres Ende der heterogenen Rohrbündelgruppe (7) ist mit dem unteren horizontalen Sammler (6) verbunden; wobei die heterogene Rohrbündelgruppe (7), der Energiesparer (9), der Kondensator (10) und der Kondensationsluftvorwärmer (11) nacheinander entlang einer Rauchgasströmungsrichtung angeordnet sind; wobei sich der Energiesparer (9) unterhalb der Kesseltrommel (1) befindet; und
wobei die Membranwand (2) eine linke Membranwand (21), eine rechte Membranwand (22) und die vordere Membranwand (23) umfasst; wobei eine erste Reihe von Rohrbündeln der heterogenen Rohrbündelgruppe (7) so konfiguriert ist, dass sie sich zur vorderen Membranwand (23) hin biegt, um eine obere Membranwand und eine untere Membranwand zu bilden; und wobei der Brenner an der linken Membranwand (21), der rechten Membranwand (22) oder der vorderen Membranwand (23) vorgesehen ist.

5. Eckrohrkessel nach Anspruch 4, **dadurch gekennzeichnet, dass** oberhalb der Kesseltrommel (1) ein obenliegender Kondensator (14) vorgesehen ist; wobei der obenliegende Kondensator (14) eine Mantel-Rohr-Struktur aufweist; wobei eine Rohrseite des Kopfkondensators (14) mit Kühlwasser gespeist wird, wobei ein Ausfluss aus einem Auslass auf der Rohrseite des obenliegenden Kondensators (14) Hochtemperaturwasser oder nasser Sattdampf ist; wobei ein Einlass auf der Mantelseite des obenliegenden Kondensators (14) mit einem Dampfauslass der Kesseltrommel (1) verbunden ist, wobei ein Auslass auf der Mantelseite des obenliegenden Kondensators (14) mit einem oberen Einlass der Kesseltrommel (1) verbunden ist; und wobei die Anzahl der Durchgänge auf der Rohrseite 1-4 beträgt.

6. Eckrohrkessel nach Anspruch 4, **dadurch gekennzeichnet, dass** 1 bis 6 Reihen von Blankrohrbündel (15) vor der heterogenen Rohrbündelgruppe (7) angeordnet sind, um die Temperatur eines in die heterogene Rohrbündelgruppe eintretenden Rauchgases zu senken (7); wobei bezüglich einer Reihe von symmetrisch zweiflügeligen längsgekrümmten Rippenrohren (71), die der Feuerung am nächsten liegen, und bezüglich einer Reihe von symmetrisch zweiflügeligen längsgeflachten Rippenrohren (72), die der Feuerung am nächsten liegen, ein Ende von Rippen an einer Seite in der Nähe der Feuerung gekürzt wird, um die Länge der in der Feuerung hineinragenden Rippen zu verringern.

7. Eckrohrkessel nach Anspruch 4, ferner umfassend
ein Dampfüberhitzer (12);
**dadurch gekennzeichnet, dass** der Dampfüberhitzer (12) vor der heterogenen Rohrbündelgruppe (7) vorgesehen ist; dass ein Einlass des Dampfüberhitzers (12) mit einem Sattdampfauslass der Kesseltrommel (1) oder dem Auslass auf der Rohrseite des obenliegenden Kondensators (14) verbunden ist.

8. Eckrohrkessel nach Anspruch 4, **dadurch gekennzeichnet, dass** der obere horizontale Sammler (5) einen oberen Sammler (51), einen oberen linken Sammler (52), einen oberen rechten Sammler (53) und einen oberen vorderen Sammler (54) umfasst;
wobei der obere Sammler (51) mit dem oberen Ende der heterogenen Rohrbündelgruppe (7) verbunden ist; wobei der obere linke Sammler (52) mit einem oberen Ende der linken Membranwand (21) verbunden ist; wobei der obere rechte Kopf (53) mit einem oberen Ende der rechten Membranwand (22) verbunden ist; wobei der obere vordere Sammler (54) mit einem oberen Ende der vorderen Membranwand (23) verbunden ist; und
wobei die Enden des oberen Sammlers (51) mit dem oberen linken Sammler (52) bzw. dem oberen rechten Sammler (53) verbunden sind; wobei die Enden des oberen vorderen Sammlers (54) mit dem oberen linken Sammler (52) bzw. dem oberen rechten Sammler (53) verbunden sind; und wobei die Mittellinien des oberen Sammlers (51), des oberen linken Sammlers (52) und des oberen rechten Sammlers (53) alle in der gleichen horizontalen Ebene liegen, die eine Dampf-Wasser-Grenzfläche des oberen Sammlers (51), des oberen linken Sammlers (52), des oberen rechten Sammlers (53) und des oberen vorderen Sammlers (54) ist.

9. Eckrohrkessel nach Anspruch 4, **dadurch gekennzeichnet, dass** der Brenner ein planarer wassergekühlter Vormischbrenner (8), ein Diffusionsbrenner (81) oder ein Vormischbrenner ist; wobei der Vormischbrenner ein Metallfaserbrenner, ein poröser Keramikbrenner, ein Keramikplattenbrenner oder ein perforierter Metallplattenbrenner ist;
wobei bei Verwendung des planaren wassergekühlten Vormischbrenners (8) der planare wassergekühlte Vormischbrenner (8) an einer Vorderwand der Feuerung angeordnet ist; wobei ein Flachstahl zwischen benachbarten wassergekühlten Rohren in einem wassergekühlten Rohrbündel an einer Position an der Vorderwand der Feuerung, an der der planare wassergekühlte Vormischbrenner (8) vorgesehen ist, entfernt wird, um einen Spalt zu bilden; und wobei ein Vormischer (13) mit rechteckigem Querschnitt auf einem Luftkanal angeordnet ist, der eine Luftseite des planaren wassergekühlten Vormischbrenners (8) mit dem Kondensationsluftvorwärmer (11) verbindet;
wobei bei Verwendung des Diffusionsbrenners (81) der Diffusionsbrenner (81) an der linken Membranwand (21) oder der rechten Membranwand (22) installiert wird; wobei in der Feuerung eine Trennmembranwand (24) vorgesehen ist; wobei die Trennmembranwand (24) eine einreihige wassergekühlte Membranwand ist; wobei eine linke Seite der Trennmembranwand (24) über einen Flachstahl mit der linken Membranwand (21) verbunden ist und eine rechte Seite der Trennmembranwand (24) sich in der Feuerung erstreckt; wobei zwischen benachbarten zwei Rohren in einem Endrohrbündel der Trennmembranwand (24) kein Flachstahl vorgesehen ist; und wobei das obere und untere Ende der Trennmembranwand (24) mit dem oberen horizontalen Sammler (5) bzw. dem unteren horizontalen Sammler (6) verbunden sind; und
wobei bei Verwendung des Vormischbrenners der Vormischbrenner an der linken Membranwand (21), der rechten Membranwand (22) oder der vorderen Membranwand (23) vorgesehen ist.

10. Eckrohrkessel nach Anspruch 8, **dadurch gekennzeichnet, dass** das Dampfleitrohr (3) ein Hauptdampfleitrohr (31), ein abzweigendes Dampfleitrohr (32) und ein unabhängiges Dampfleitrohr (33) umfasst;
wobei ein Ende des Hauptdampfleitrohrs (31) mit der Kesseltrommel (1) verbunden ist und das andere Ende des Hauptdampfleitrohrs (31) verschlossen ist; wobei ein Ende des abzweigenden Dampfleitrohrs (32) mit dem oberen Sammler (51), dem oberen linken Sammler (52), dem oberen rechten Sammler (53) und dem oberen vorderen Sammler (54) verbunden ist und das andere Ende des abzweigenden Dampfleitrohrs (32) mit dem Hauptdampfleitrohr (31) verbunden ist; wobei eine Vielzahl von Hauptdampfleitrohren (31) entlang der Mittellinie der Kesseltrommel (1) angeordnet sind und jedes der Vielzahl von Hauptdampfleitrohren (31) mit einer Vielzahl von abzweigenden Dampfleitrohren (32) verbunden ist, um Dampf aus der heterogenen Rohrbündelgruppe (7) und der Membranwand (2) zum Sammeln; und wobei ein Ende des unabhängigen Dampfleitrohrs (33) mit dem oberen Sammler (51), dem oberen linken Sammler (52), dem oberen rechten Sammler (53) und dem oberen vorderen Sammler (54) verbunden ist, und wobei das andere Ende des unabhängigen Dampfleitrohrs (33) mit der Kesseltrommel (1) verbunden ist.

11. Eckrohrkessel nach Anspruch 10, **dadurch gekennzeichnet, dass** der untere horizontale Sammler (6) einen unteren Sammler (61), einen unteren linken Sammler (62), einen unteren rechten Sammler (63) und einen unteren vorderen Sammler (64) und einen unteren Verteilersammler (65) umfasst;
wobei der untere Sammler (61) mit dem unteren Ende der heterogenen Rohrbündelgruppe (7) verbunden ist; wobei der untere linke Sammler (62) mit einem unteren Ende der linken Membranwand (21) verbunden ist; wobei der untere rechte Sammler (63) mit einem unteren Ende der rechten Membranwand (22) verbunden ist; und der untere vordere Sammler (64) mit einem unteren Ende der vorderen Membranwand (23) verbunden ist;
wobei die Enden des unteren Sammlers (61) mit dem unteren linken Sammler (62) bzw. dem unteren rechten Sammler (63) verbunden sind; wobei die Mittellinien des unteren Sammlers (61), des unteren linken Sammlers (62) und des unteren rechten Sammlers (63) in der gleichen horizontalen Ebene liegen, die über den Mittellinien des unteren vorderen Sammlers (64) und des unteren Verteilersammlers (65) liegt; und wobei der untere Verteilersammeler (65) mit dem unteren Ende des Fallrohrs (4) verbunden ist und der untere Verteilersammeler (65) und der untere Sammeler (61) durch eine Vielzahl von Abzweigrohren verbunden sind;
wobei das Fallrohr (4) ein vorderes Fallrohr (41), ein hinteres Fallrohr (42) und ein wasserführendes Fallrohr (43) umfasst, wobei das wasserführende Fallrohr (43) in der heterogenen Rohrbündelgruppe vorgesehen ist (7); und
wobei ein oberes Ende des vorderen Fallrohrs (41) mit dem oberen linken Sammler (52) und dem oberen rechten Sammler (53) verbunden ist; wobei das vordere Fallrohr (41) den unteren linken Sammler (62) und den unteren rechten Sammler (63) durchdringt und ein unteres Ende des vorderen Fallrohrs (41) mit dem unteren vorderen Sammler verbunden (64) ist; wobei ein oberes Ende des hinteren Fallrohrs (42) mit der Kesseltrommel (1) verbunden ist und ein unteres Ende des hinteren Fallrohrs (42) mit dem unteren linken Sammler (62) und dem unteren rechten Sammler (63) verbunden ist und wobei ein unteres Ende des wasserführenden Fallrohrs (43) mit dem unteren Verteilersammler (65) verbunden ist, um der heterogenen Rohrbündelgruppe (7) Wasser zuzuführen.

12. Eckrohrkessel nach Anspruch 11, **dadurch gekennzeichnet, dass** der Eckrohrkessel bei von der Kesseltrommel (1) getrenntem Dampfleitrohr (3) als Heißwasserkessel fungiert; wobei das Heizungsrücklaufwasser zunächst in die Enden des oberen linken Sammlers (52) und des oberen rechten Sammlers (53) in der näher dem hinteren Ende des Eckrohrkessels eintritt und wird dem Bereich des oberen Sammlers (51) zugeführt, der der zweiten bis fünften Reihe von Rohrbündeln in den heterogenen Rohrbündelgruppen (7) entspricht; dann fließt das Heizungsrücklaufwasser entlang der zweiten bis fünten Reihe der Rohrbündel zum unteren Sammler (61) und tritt unterhalb der ersten Reihe der heterogenen Rohrbündelgruppe (7) entlang des unteren linken Sammlers (62) und des unteren rechten Sammlers (63) in den unteren Sammler (61) ein, wobei das Heizungsrücklaufwasser anschließend nach oben zum oberen Sammler (51) strömt und in den oberen horizontalen Sammler (5) eintritt , der einer zweiten Reihe des Blankrohrbündels (15) entlang des oberen linken Sammlers (52) und des oberen rechten Sammlers (53) entspricht; wobei das Heizungsrücklaufwasser nach unten zum unteren horizontalen Sammler (6) fließt, das der zweiten Reihe des Blankrohrbündels (15) entspricht, in den unteren linken Sammler (62), den unteren rechten Sammler (63) und den unteren vorderen Sammler (64) eintritt und dann nach oben zum oberen horizontalen Sammler entlang der linken Membranwand (21), der rechten Membranwand (22), der vorderen Membranwand (23) und einer ersten Reihe des Blankrohrbündels (15) fließt und den Eckrohrkessel verlässt; und
wobei ein Sicherheitsventil (55) in der Nähe eines Auslasses des oberen horizontalen Sammlers (5) vorgesehen ist, um im Falle einer stagnierenden Strömung überschüssigen Dampf rechtzeitig abzuführen.

13. Eckrohrkessel nach einem der Ansprüche 4-11, **dadurch gekennzeichnet, dass**, wenn der Brenner der ebene wassergekühlte Vormischbrenner (8) ist, der Vormischer (13) mit rechteckigem Querschnitt an einem divergierenden Abschnitt des Luftkanals vorgesehen ist, der den ebenen wassergekühlten Vormischbrenner (8) mit der Luftseite des Kondensationsluftvorwärmers (11) verbindet;
wobei der Vormischer (13) mit rechteckigem Querschnitt eine Brenngas-Verteilungsleitung (131) und eine Vielzahl von parallel angeordneten Brenngasräumen (132) umfasst; und wobei die Vielzahl von Brenngasräumen (132) mit der Brenngas-Verteilungsleitung (131) in Verbindung steht; und
wobei jeder der Vielzahl von Brenngasräumen (132) mit einem konvergierenden und divergierenden Kanal (133) versehen ist; wobei ein Brenngasloch (134) an einer engsten Stelle des konvergierenden Kanals (133) vorgesehen ist; wobei ein Brenngas durch die Brenngas-Verteilungsleitung (131) in die Vielzahl von Brenngasräumen (132) eintritt und dann durch das Brenngasloch (134) in einen Luftraum eintritt; und wobei Luft zuerst beschleunigt und dann durch den konvergierenden und divergierenden Kanal (133) verlangsamt wird und sich gleichmäßig mit dem Brenngas mischt, wobei das Brenngas Erdgas, Wasserstoff oder ein Erdgas-Wasserstoff-Gemisch umfasst.

14. Eckrohrkessel nach Anspruch 13, **dadurch gekennzeichnet, dass** die Membranwand (2) mit mehreren planaren wassergekühlten Vormischbrennern (8) versehen ist, die in einer Höhenrichtung und/oder einer horizontalen Richtung angeordnet sind;
wenn die mehreren planaren wassergekühlten Vormischbrenner (8) in horizontaler Richtung angeordnet sind, die vordere Membranwand (23), der obere Sammler (51), der obere vordere Sammler (54), der untere vordere Sammler (64) und die Kesseltrommel (1) verlängert sind; und
wenn die mehreren planaren wassergekühlten Vormischbrenner (8) in Höhenrichtung angeordnet sind, die heterogene Rohrbündelgruppe (7), die Membranwand (2) und das Fallrohr (4) verlängert sind und die Kesseltrommel (1) vergrößert ist, und wobei der Energiesparer (9), der Kondensator (10) und der Kondensationsluftvorwärmer (11) in Höhenrichtung angeordnet sind.

15. Eckrohrkessel nach Anspruch 14, **dadurch gekennzeichnet, dass**, wenn die mehreren planaren wassergekühlten Vormischbrenner (8) in der Höhenrichtung angeordnet sind, der Eckrohrkessel von seiner Mitte aus in der Höhenrichtung in einen oberen Teil und einen unteren Teil geteilt ist; wobei ein Boden des oberen Teils und eine Oberseite des unteren Teils jeweils mit einem Sammler versehen sind; und wobei der Sammler am Boden des oberen Teils und der Sammler an der Oberseite des unteren Teils durch einen 180° Biegeabschnitt verbunden sind.

16. Eckrohrkessel nach Anspruch 14, **dadurch gekennzeichnet, dass**, wenn die mehreren planaren wassergekühlten Vormischbrenner (8) in horizontaler Richtung angeordnet sind, wobei der obere vordere Sammler (54) und der untere vordere Sammler (64) in Richtung einer Rückseite der Feuerung gebogen sind, so dass die mehreren planaren wassergekühlten Vormischbrenner (8) in einem bestimmten Winkel angeordnet sind; und wobei die vordere Membranwand (23) in dem bestimmten Winkel in Richtung der Rückseite der Feuerung gebogen ist.

17. Eckrohrkessel nach Anspruch 14, **dadurch gekennzeichnet, dass** die mehreren planaren wassergekühlten Vormischbrenner (8) in zwei Reihen in horizontaler Richtung angeordnet sind, wobei die beiden Reihen der planaren wassergekühlten Vormischbrenner (8) einander gegenüberliegend angeordnet sind; wobei jede Reihe planarer wassergekühlter Vormischbrenner (8) mit der Membranwand (2), dem Dampfleitrohr (3), dem Fallrohr (4), dem oberen horizontalen Sammler (5), dem unteren horizontalen Sammler (6) und der heterogenen Rohrbündelgruppe (7) versehen ist; und wobei die zwei Reihen planarer wassergekühlter Vormischbrenner (8) teilen sich die Kesseltrommel (1), den Energiesparer (9), den Kondensator (10) und den Kondensationsluftvorwärmer (11).

18. Eckrohrkessel nach Anspruch 17, **dadurch gekennzeichnet, dass** die mehreren planaren wassergekühlten Vormischbrenner (8) gleichzeitig in horizontaler und in Höhenrichtung angeordnet sind.

19. Betriebsverfahren des Eckrohrkessels nach einem der Ansprüche 9 und 13-17, umfassend:
Zuführen von Kaltluft durch ein Kesselgebläse; Erwärmen der Kaltluft durch den Kondensationsluftvorwärmer (11) und anschließendes Zuführen zu dem Vormischer (13) mit rechteckigem Querschnitt; Zuführen des Brenngases zu der zu verbrennenden Feuerung, um eine Schlitzflamme an einer Wurzel eines wassergekühlten Rohrbündels zu bilden und Hochtemperatur-Rauchgas zu erzeugen; und wobei das Hochtemperatur-Rauchgas nacheinander durch die heterogene Rohrbündelgruppe (7), den Energiesparer (9), den Kondensator (10) und den Kondensationsluftvorwärmer (11) strömen zu lassen, um auf 50°C oder darunter abgekühlt zu werden, gefolgt von der Abgabe durch einen Schornstein; und
Zulassen, dass das Speisewasser in den Kondensator (10) eintritt, um das Rauchgas zu kondensieren, und dann in den Energiesparer (9) eintritt, um auf 100 °C vorgewärmt zu werden, um in einen unteren Teil der Kesseltrommel (1) einzutreten; gleichmäßiges Verteilen des Speisewassers entlang des Fallrohrs (4) und des unteren horizontalen Sammlers (6) zu den unteren Enden der heterogenen Rohrbündelgruppe (7) und der Membranwand (2), um zu bewirken, dass das Speisewasser Wärme absorbiert und kontinuierlich verdampft, um einen Dampf-Wasser-Gemisch zu bilden; Ermöglichen, dass der Dampf-Wasser-Gemisch in den oberen horizontalen Sammler (5) zur Dampfwasservorabscheidung eintritt, wobei der Dampf in einen Dampfraum in einem oberen Teil der Kesseltrommel (1) durch das Dampfleitrohr (3) eintreten und den Eckrohrkessel von einer Oberseite der Kesseltrommel (1) in Form von Sattdampf verlassen kann; und wobei eine Dampf-Wasser-Grenzfläche in dem Eckrohrkessel auf einer horizontalen Mittelebene der Kesseltrommel (1) angeordnet ist.

20. Betriebsverfahren nach Anspruch 19, weiterhin umfassend:
wenn überhitzter Dampf erforderlich ist, Zulassen, dass der Sattdampf, der die Kesseltrommel (1) verlässt, in einen Dampfüberhitzer (12) eintritt, um weiterhin Wärme zu absorbieren und so den überhitzten Dampf zu bilden; und Zuführen des überhitzten Dampfs von der Oberseite des Dampfüberhitzers (12) zu den Benutzern.

21. Betriebsverfahren nach Anspruch 19, weiterhin umfassend:
wenn Niedertemperatur-Sattdampf oder Heißwasser benötigt wird, nachdem der Sattdampf die Kesseltrommel (1) verlassen hat und in den oberen Teil des Kopfkondensators (14) eingetreten ist, Zulassen, dass der Sattdampf Wärme an der Mantelseite des Kopfkondensators (14) abgebt, um flüssiges Wasser zu bilden, und das flüssige Wasser zurück zur Kesseltrommel (1) fließen zu lassen; und Zulassen, dass Speisewasser mit niedriger Temperatur Wärme an der Rohrseite des obenliegenden Kondensators (14) absorbiert, um Niedertemperatur-Sattdampf oder Heißwasser zu bilden.

22. Betriebsverfahren nach Anspruch 19, **dadurch gekennzeichnet, dass** der Sattdampf aus der Kesseltrommel (1) in die Mantelseite des obenliegenden Kondensators (14) eintritt und Wärme abgibt, um flüssiges Wasser zu bilden, und entlang eines Rohrs am Boden des obenliegenden Kondensators (14) unter Einwirkung der Schwerkraft in die Kesseltrommel (1) fließt; wobei erhitztes Niedertemperaturwasser entlang der Rohrseite des obenliegenden Kondensators (14) fließt und die vom Sattdampf freigesetzte Wärme absorbiert, um Hochtemperaturwasser über 110 °C oder nassen Sattdampf zu bilden und den Kopfkondensator (14) zu verlassen; und
wenn Heißwasser erzeugt wird, wird der Eckrohrkessel mit einem Mikroüberdruck oder einem Vakuumunterdruck betrieben, um Heißwasser mit einer Temperatur von höchstens 110°C oder 85°C zu erzeugen.

23. Betriebsverfahren nach Anspruch 19, **dadurch gekennzeichnet, dass** bei Verwendung des planaren wassergekühlten Vormischbrenners (8) Erdgas gleichmäßig in den Vormischer (13) mit rechteckigem Querschnitt eingeleitet wird, um ein Vormischgas zu bilden; und wobei das Vormischgas in den planaren wassergekühlten Vormischbrenner (8) eintritt und gleichmäßig auf der Oberfläche des planaren wasserg
ekühlten Vormischbrenners (8) verteilt wird und in der Feuerung durch einen Spalt zwischen der vorderen Membranwand (23) eintritt, um verbrannt zu werden.

## Revendications

1. Structure de transfert de chaleur à groupe de faisceaux de tubes hétérogènes, comprenant :
une pluralité de tubes à ailettes incurvés longitudinaux symétriques à deux ailes (71) ; et
une pluralité de tubes à ailettes à plaques longitudinales symétriques à deux ailes (72) ;
**caractérisé en ce que** chacun de la pluralité de tubes à ailettes incurvés longitudinaux symétriques à deux ailes (71) comprend un premier tube nu (711), et des ailettes incurvées longitudinales à deux ailes (712) sont disposées symétriquement le long d'un axe d'une section verticale du premier tube nu (711) ;
chacun de la pluralité de tubes à ailettes à plaques longitudinales symétriques à deux ailes (72) comprend un deuxième tube nu (721), et des aciers plats longitudinaux (722) sont disposés symétriquement le long d'un axe d'une section verticale du deuxième tube nu (721);
la pluralité de tubes à ailettes incurvés longitudinaux symétriques à deux ailes (71) et la pluralité de tubes à ailettes longitudinaux symétriques à deux ailes (72) sont disposés en alternance en au moins deux rangées ; les tubes adjacents à un tube à ailettes incurvées longitudinales symétriques à deux ailes (71) à l'intérieur d'un groupe de faisceaux de tubes sont tous deux un tube à ailettes à plaque longitudinale symétrique à deux ailes (72) ; et une extrémité de chaque rangée du groupe de faisceaux de tubes est dotée du tube à ailettes incurvées longitudinales symétrique à deux ailes (71) ou du tube à ailettes à plaque longitudinale symétrique à deux ailes (72) ; et
des ailettes de deux tubes à ailettes incurvés longitudinaux symétriques à deux ailes adjacents (71) sont configurées pour entourer les tubes à ailettes à plaque longitudinale symétrique à deux ailes (72) entre eux ; un espace est ménagé entre un tube à ailettes incurvées longitudinales symétrique à deux ailes (71) et un tube à ailettes à plaque longitudinale symétrique à deux ailes (72) adjacent à celui-ci pour être configuré comme un canal d'écoulement de gaz de combustion pour améliorer le transfert de chaleur par convection ; le long d'une direction d'écoulement des gaz de combustion, tous les quatre tubes forment un espace en forme de prisme hexagonal, dans lequel l'espace en forme de prisme hexagonal est entouré de deux segments d'arc arrière d'ailette incurvée longitudinale constitués d'un segment AB et d'un segment DE, deux segments droits d'ailette de plaque longitudinale constitués d'un segment BC et d'un segment EF, et deux segments d'arc longitudinaux en tube nu constitués d'un segment CD et d'un segment FA ; et l'espace en forme de prisme hexagonal comporte une entrée de gaz de combustion et une sortie de gaz de combustion.

2. Structure de transfert de chaleur à groupe de faisceaux de tubes hétérogènes selon la revendication 1, **caractérisée en ce que** le diamètre du premier tube nu (711) est le même que celui du deuxième tube nu (721) ; et la pluralité de tubes à ailettes incurvés longitudinaux symétriques à deux ailes (71) et la pluralité de tubes à ailettes à plaques longitudinales symétriques à deux ailes (72) ont une structure de paroi à membrane au niveau d'une partie de courbure et une partie reliée à un collecteur.

3. Structure de transfert de chaleur à groupe de faisceaux de tubes hétérogènes selon la revendication 1, **caractérisée en ce que** chacun de la pluralité de tubes à ailettes incurvés longitudinaux symétriques à deux ailes (71) est formé par laminage intégral, coulée continue et laminage ou forgeage, ou par soudage un tube rond au premier tube nu (711) et découpé ; et chacun de la pluralité de tubes à ailettes à plaques longitudinales symétriques à deux ailes (72) est formé par laminage intégral, coulée continue et laminage ou forgeage, ou par soudage de l'acier plat longitudinal (722) au deuxième tube nu (721) par soudage double face à pénétration totale.

4. Une chaudière à tube d'angle, comprenant :
un tambour de chaudière (1) ;
une paroi à membrane (2) ;
un tube de guidage de vapeur (3) ;
un déversoir (4) ;
un collecteur horizontal supérieur (5) ;
un collecteur horizontal inférieur (6) ;
un brûleur ;
un économiseur d'énergie (9) ;
un condenseur (10) ; un préchauffeur d'air à condensation (11) ; et
un groupe de faisceaux de tubes hétérogènes (7) ;
**caractérisé en ce que** le groupe de faisceaux de tubes hétérogènes (7) est la structure de transfert de chaleur à groupe de faisceaux de tubes hétérogènes selon l'une quelconque des revendications 1 à 3 ;
un espace entouré par la paroi à membrane (2) est configuré comme un four ; le collecteur horizontal supérieur (5) et le collecteur horizontal inférieur (6) sont disposés de manière correspondante sur les extrémités supérieure et inférieure du four ; le groupe de faisceaux de tubes hétérogènes (7) est disposé dans une direction d'évacuation des gaz de combustion du four ; et une ligne centrale du tambour de chaudière (1) est dans le même plan qu'une ligne centrale du collecteur horizontal supérieur (5), et est parallèle à une paroi membranaire de paroi avant (23) ;
deux extrémités de la paroi à membrane (2) sont reliées respectivement au collecteur horizontal supérieur (5) et au collecteur horizontal inférieur (6) ; une extrémité inférieure du tube de guidage de vapeur (3) est reliée au collecteur horizontal supérieur (5), et une extrémité supérieure du tube de guidage de vapeur (3) est reliée à une partie supérieure du tambour de chaudière (1) ; une extrémité supérieure du déversoir (4) est reliée au tambour de chaudière (1) et au collecteur horizontal supérieur (5), et une extrémité inférieure du déversoir (4) est reliée au collecteur horizontal inférieur (6) ; une extrémité supérieure du groupe de faisceaux de tubes hétérogènes (7) est reliée au collecteur horizontal supérieur (5), et une extrémité inférieure du groupe de faisceaux de tubes hétérogènes (7) est reliée au collecteur horizontal inférieur (6) ; le groupe de faisceaux de tubes hétérogènes (7), l'économiseur d'énergie (9), le condenseur (10) et le préchauffeur d'air à condensation (11) sont disposés séquentiellement le long d'une direction d'écoulement de gaz de combustion ; et l'économiseur d'énergie (9) est situé sous le tambour de chaudière (1) ; et
la paroi à membrane (2) comprend une paroi membranaire de paroi gauche (21), une paroi membranaire de paroi droite (22) et la paroi membranaire de paroi avant (23) ; une première rangée de faisceaux de tubes du groupe de faisceaux de tubes hétérogènes (7) est configurée pour se plier vers la paroi membranaire de paroi avant (23) pour former une paroi membranaire de paroi supérieure et une paroi membranaire de paroi inférieure ; et le brûleur est disposé sur la paroi membranaire de paroi gauche (21), la paroi membranaire de paroi droite (22) ou la paroi membranaire de paroi avant (23).

5. Chaudière à tube d'angle selon la revendication 4, **caractérisée en ce qu'**un condenseur aérien (14) est prévu au-dessus du tambour de chaudière (1) ; le condenseur aérien (14) a une structure à coque et tube ; un côté tube du condenseur aérien (14) est alimenté en eau de refroidissement, et un écoulement sortant d'une sortie sur le côté tube du condenseur aérien (14) est de l'eau à haute température ou de la vapeur saturée humide ; une entrée du côté coque du condenseur aérien (14) est reliée à une sortie de vapeur du tambour de chaudière (1), et une sortie du côté coque du condenseur aérien (14) est reliée à une entrée supérieure de la chaudière tambour (1); et le nombre de passes sur le côté tube est de 1 à 4.

6. Chaudière à tube d'angle selon la revendication 4, **caractérisée en ce que** 1 à 6 rangées de faisceaux de tubes nus (15) sont disposées devant le groupe de faisceaux de tubes hétérogènes (7) pour réduire la température des gaz de combustion entrant dans le groupe de faisceaux de tubes hétérogènes (7); et concernant une rangée de tubes à ailettes incurvés longitudinaux symétriques à deux ailes (71) la plus proche du four et une rangée de tubes à ailettes à plaques longitudinales symétriques à deux ailes (72) la plus proche du four, une extrémité d'ailettes sur un côté proche du le four est coupé pour réduire la longueur des ailettes s'étendant dans le four.

7. Chaudière à tube d'angle selon la revendication 4, comprenant en outre :
un surchauffeur de vapeur (12) ;
**caractérisé en ce que** le surchauffeur de vapeur (12) est prévu devant le groupe de faisceaux de tubes hétérogènes (7) ; et une entrée du surchauffeur de vapeur (12) est reliée à une sortie de vapeur saturée du tambour de chaudière (1) ou à la sortie du côté tube du condenseur aérien (14).

8. Chaudière à tube d'angle selon la revendication 4, **caractérisée en ce que** le collecteur horizontal supérieur (5) comprend un collecteur supérieur (51), un collecteur supérieur-gauche (52), un collecteur supérieur-droit (53) et un collecteur supérieur-avant (54) ;
le collecteur supérieur (51) est relié à l'extrémité supérieure du groupe de faisceaux de tubes hétérogènes (7) ; le collecteur supérieur-gauche (52) est relié à une extrémité supérieure de la paroi membranaire de paroi gauche (21) ; le collecteur supérieur-droit (53) est relié à une extrémité supérieure de la paroi membranaire de paroi droite (22) ; et le collecteur supérieur-avant (54) est relié à une extrémité supérieure de la paroi membranaire de paroi avant (23) ; et
les extrémités du collecteur supérieur (51) sont reliées au collecteur supérieur-gauche (52) et au collecteur supérieur-droit (53), respectivement ; les extrémités du collecteur supérieur-avant (54) sont reliées au collecteur supérieur-gauche (52) et au collecteur supérieur-droit (53), respectivement ; et les lignes centrales du collecteur supérieur (51), du collecteur supérieur-gauche (52) et du collecteur supérieur-droit (53) sont toutes dans le même plan horizontal qui est une interface vapeur-eau du collecteur supérieur (51), du collecteur supérieur-gauche (52), du collecteur supérieur-droit (53) et du collecteur supérieur-avant (54).

9. Chaudière à tube d'angle selon la revendication 4, **caractérisée en ce que** le brûleur est un brûleur prémélangé planaire refroidi par eau (8), un brûleur à diffusion (81), ou un brûleur prémélangé ; dans le quelle brûleur prémélangéest un brûleur en fibre métallique, un brûleur en céramique poreuse, un brûleur à plaque en céramique ou un brûleur à plaque métallique perforée ;
lorsque le brûleur prémélangé planaire refroidi par eau (8) est utilisé, le brûleur prémélangé planaire refroidi par eau (8) est disposé sur une paroi avant du four ; un acier plat entre des tubes adjacents refroidis par eau dans un faisceau de tubes refroidis par eau à un endroitsur la paroi avant du four où est disposé le brûleur prémélangé planaire refroidi par eau (8) est retiré pour former un espace ; et un prémélangeur de section rectangulaire (13) est disposé sur un conduit d'air reliant un côté air du brûleur prémélangé planaire refroidi par eau (8) au préchauffeur d'air à condensation (11) ;
lorsque le brûleur à diffusion (81) est utilisé, le brûleur à diffusion (81) est installé sur la paroi membranaire de paroi gauche (21) ou sur la paroi membranaire de paroi droite (22) ; une paroi à membrane de séparation (24) est disposée dans le four ; la paroi à membrane de séparation (24) est une paroi à membrane à une seule rangée refroidie par eau ; un côté gauche de la paroi à membrane de séparation (24) est relié à la paroi membranaire de paroi gauche (21) par l'intermédiaire d'un acier plat, et un côté droit de la paroi à membrane de séparation (24) s'étend dans le four ; aucun acier plat n'est prévu entre deux tubes adjacents dans un faisceau de tubes de queue de la paroi à membrane de séparation (24) ; et les extrémités supérieure et inférieure de la paroi à membrane de séparation (24) sont reliées au collecteur horizontal supérieur (5) et au collecteur horizontal inférieur (6), respectivement ; et
lorsque le brûleur prémélangé est utilisé, et le brûleur prémélangé est disposé sur la paroi membranaire de paroi gauche (21), la paroi membranaire de paroi droite (22) ou la paroi membranaire de paroi avant (23).

10. Chaudière à tube d'angle selon la revendication 8, **caractérisée en ce que** le tube de guidage de vapeur (3) comprend un tube de guidage de vapeur principal (31), un tube de guidage de vapeur de dérivation (32) et un tube de guidage de vapeur indépendant (33) ;
une extrémité du tube de guidage de vapeur principal (31) est reliée au tambour de chaudière (1), et l'autre extrémité du tube de guidage de vapeur principal (31) est fermée ; une extrémité du tube de guidage de vapeur de dérivation (32) est reliée au collecteur supérieur (51), au collecteur supérieur-gauche (52), au collecteur supérieur-droit (53) et au collecteur supérieur avant (54), et l'autre extrémité du tube de guidage de vapeur de dérivation (32) est reliée au tube de guidage de vapeur principal (31) ; une pluralité de tubes de guidage de vapeur principaux (31) sont disposés le long de la ligne centrale du tambour de chaudière (1), et chacun de la pluralité de tubes de guidage de vapeur principaux (31) est relié à une pluralité de tubes de guidage de vapeur de dérivation (32) pour collecter la vapeur provenant du groupe de faisceaux de tubes hétérogènes (7) et de la paroi à membrane (2) ; et une extrémité du tube de guidage de vapeur indépendant (33) est reliée au collecteur supérieur (51), au collecteur supérieur-gauche (52), au collecteur supérieur-droit (53) et au collecteur supérieur-avant (54), et l'autre extrémité du tube de guidage de vapeur indépendant (33) est reliée au tambour de chaudière (1).

11. Chaudière à tube d'angle selon la revendication 10, **caractérisée en ce que** le collecteur horizontal inférieur (6) comprend un collecteur inférieur (61), un collecteur inférieur-gauche (62), un collecteur inférieur-droit (63), un collecteur inférieur-avant (64) et un collecteur de distribution inférieur (65) ;
le collecteur inférieur (61) est relié à l'extrémité inférieure du groupe de faisceaux de tubes hétérogènes (7) ; le collecteur inférieur-gauche (62) est relié à une extrémité inférieure de la paroi membranaire de paroi gauche (21) ; le collecteur inférieur-droit (63) est relié à une extrémité inférieure de la paroi membranaire de paroi droite (22) ; et le collecteur inférieur-avant (64) est relié à une extrémité inférieure de la paroi membranaire de paroi avant (23) ;
les extrémités du collecteur inférieur (61) sont reliées au collecteur inférieur-gauche (62) et au collecteur inférieur-droit (63), respectivement ; les lignes centrales du collecteur inférieur (61), du collecteur inférieur-gauche (62) et du collecteur inférieur-droit (63) sont situées dans le même plan horizontal qui est au-dessus des lignes centrales du collecteur inférieur-avant (64) et le collecteur de distribution inférieur (65) ; et le collecteur de distribution inférieur (65) est relié à l'extrémité inférieure du déversoir (4), et le collecteur de distribution inférieur (65) et le collecteur inférieur (61) sont reliés par une pluralité de tuyaux de dérivation ;
la descente (4) comprend une descente de paroi avant (41), une descente arrière (42) et une descente d'alimentation en eau (43), dans lequel la descente d'alimentation en eau (43) est prévue dans le groupe de faisceaux de tubes hétérogènes (7); et
une extrémité supérieure du descendeur de paroi avant (41) est reliée au collecteur supérieur-gauche (52) et au collecteur supérieur-droit (53) ; la descente de paroi avant (41) pénètre à travers le collecteur inférieur-gauche (62) et le collecteur inférieur-droit (63), et une extrémité inférieure de la descente de paroi avant (41) est reliée au collecteur inférieur-avant (64); une extrémité supérieure du collecteur arrière (42) est reliée au tambour de chaudière (1), et une extrémité inférieure du collecteur arrière (42) est reliée au collecteur inférieur-gauche (62) et au collecteur inférieur-droit (63); et une extrémité inférieure de la descente d'alimentation en eau (43) est reliée au collecteur de distribution inférieur (65) pour alimenter en eau le groupe de faisceaux de tubes hétérogènes (7).

12. Chaudière à tube d'angle selon la revendication 11, **caractérisée en ce que** lorsque le tube de guidage de vapeur (3) est déconnecté du tambour de chaudière (1), la chaudière à tube d'angle fait office de chaudière à eau chaude ; l'eau de retour de chauffage entre en premier dans les extrémités du collecteur supérieur-gauche (52) et du collecteur supérieur-droit (53) à proximité d'une extrémité arrière de la chaudière à tube d'angle, et est acheminée vers une zone du collecteur supérieur (51) correspondant aux 2ème à5ème rangées de faisceaux de tubes dans le groupe de faisceaux de tubes hétérogènes (7) ; l'eau de retour de chauffage s'écoule vers le collecteur inférieur (61) le long des 2ème à 5ème rangées de faisceaux de tubes, pénètre dans le collecteur inférieur (61) au-dessous d'une première rangée du groupe de faisceaux de tubes hétérogènes (7) le long du collecteur inférieur-gauche (62) et le collecteur inférieur-droit (63), s'écoule vers le haut jusqu'au collecteur supérieur (51) et pénètre dans le collecteur horizontal supérieur (5) correspondant à une deuxième rangée du faisceau de tubes nus (15) le long du collecteur supérieur-gauche (52) et du collecteur supérieur-droit (53) à distribuer ; l'eau de retour de chauffage s'écoule vers le bas jusqu'au collecteur horizontal inférieur (6) correspondant à la deuxième rangée du faisceau de tubes nu (15), entre dans le collecteur inférieur-gauche (62), le collecteur inférieur-droit (63) et le collecteur inférieur-avant(64), puis s'écoule vers le haut jusqu'au collecteur horizontal supérieur le long de la paroi de membrane de paroi gauche (21), de la paroi de membrane de paroi droite (22), de la paroi membranaire de paroi avant (23), et d'un premier rangée du faisceau de tubes nus (15) et quitte la chaudière à tubes d'angle ; et
une soupape de sécurité (55) est prévue à proximité d'une sortie du collecteur horizontal supérieur (5) pour évacuer l'excès de vapeur à temps en cas d'écoulement stagnant.

13. Chaudière à tube d'angle selon l'une quelconque des revendications 4 à 11, **caractérisée en ce que** lorsque le brûleur est le brûleur prémélangé planaire refroidi par eau (8), le prémélangeur de section rectangulaire (13) est prévu au niveau d'une section divergente du conduit d'air reliant le brûleur prémélangé planaire refroidi par eau (8) au côté air du préchauffeur d'air à condensation (11) ;
le prémélangeur de section rectangulaire (13) comprend un pipeline de distribution de gaz combustible (131) et une pluralité d'espaces de gaz combustible (132) disposés en parallèle ; et la pluralité d'espaces de gaz combustible (132) communique avec le pipeline de distribution de gaz combustible (131) ; et
chacun de la pluralité d'espaces de gaz combustible (132) est pourvu d'un canal convergent-divergent (133) ; un trou de gaz combustible (134) est disposé au niveau d'une position la plus étroite du canal convergent-divergent (133) ; un gaz combustible pénètre dans la pluralité d'espaces de gaz combustible (132) à travers le pipeline de distribution de gaz combustible (131), puis pénètre dans un espace d'air à travers le trou de gaz combustible (134) ; et l'air est d'abord accéléré puis décéléré à travers le canal convergent-divergent (133), et se mélange uniformément avec le gaz combustible, dans lequel le gaz combustible comprenant du gaz naturel, de l'hydrogène ou un mélange gaz naturel-hydrogène.

14. Chaudière à tube d'angle selon la revendication 13, **caractérisée en ce que** la paroi à membrane (2) est dotée d'une pluralité de brûleurs prémélangés planaires refroidis par eau (8) qui sont disposés dans une direction de hauteur et/ou une direction horizontale ;
lorsque la pluralité de brûleurs prémélangés planaires refroidis par eau (8) sont disposés dans la direction horizontale, la paroi membranaire de paroi avant (23), le collecteur supérieur (51), le collecteur supérieur-avant(54), le collecteur inférieur-avant (64) et le tambour de chaudière (1) sont étendus ; et
lorsque la pluralité de brûleurs prémélangés planaires refroidis par eau (8) sont disposés dans le sens de la hauteur, le groupe de faisceaux de tubes hétérogènes (7), la paroi à membrane (2) et le déversoir (4) sont allongés, et le tambour de chaudière (1) est agrandi, et l'économiseur d'énergie (9), le condenseur (10) et le préchauffeur d'air à condensation (11) sont disposés dans le sens de hauteur.

15. Chaudière à tube d'angle selon la revendication 14, **caractérisée en ce que** lorsque la pluralité de brûleurs prémélangés planaires refroidis par eau (8) sont disposés dans le sens de hauteur, la chaudière à tube d'angle est divisée à partir d'un milieu de celle-ci dans le sens de hauteur en une partie supérieure et une partie inférieure ; un bas de la partie supérieure et un haut de la partie inférieure sont respectivement pourvus d'un collecteur ; et le collecteur situé au bas de la partie supérieure et le collecteur situé au sommet de la partie inférieure sont reliés par l'intermédiaire d'une partie courbée à 180°.

16. Chaudière à tube d'angle selon la revendication 14, **caractérisée en ce que** lorsque la pluralité de brûleurs prémélangés planaires refroidis par eau (8) sont disposés dans la direction horizontale, le collecteur supérieur-avant (54) et le collecteur inférieur-avant (64) sont courbés vers l'arrière du four, de sorte que la pluralité de brûleurs prémélangés planaires refroidis par eau (8) soient disposés selon un angle défini ; et la paroi membranaire de paroi avant (23) est courbée vers l'arrière du four selon l'angle défini.

17. Chaudière à tube d'angle selon la revendication 14, **caractérisée en ce que** la pluralité de brûleurs prémélangés planaires refroidis par eau (8) sont disposés en deux rangées dans la direction horizontale, les deux rangées de brûleurs prémélangés planaires refroidis par eau (8) sont disposés face à face ; chaque rangée de brûleurs prémélangés planaires refroidis par eau (8) est dotée de la paroi à membrane (2), du tube de guidage de vapeur (3), du déversoir (4), du collecteur horizontal supérieur (5), du collecteur horizontal inférieur (6) et le groupe de faisceaux de tubes hétérogènes (7) ; et les deux rangées de brûleurs prémélangés planaires refroidis par eau (8) partagent le tambour de chaudière (1), l'économiseur d'énergie (9), le condenseur (10) et le préchauffeur d'air à condensation (11).

18. Chaudière à tube d'angle selon la revendication 17, **caractérisée en ce que** la pluralité de brûleurs prémélangés planaires refroidis par eau (8) sont disposés dans les directions horizontale et en hauteur en même temps.

19. Procédé d'opération de la chaudière à tube d'angle selon l'une quelconque des revendications 9 et 13 à 17, comprenant :
apporter de l'air froid par un ventilateur de chaudière ; chauffer l'air froid par le préchauffeur d'air à condensation (11) puis l'alimenter vers le prémélangeur de section rectangulaire (13) ; alimenter le gaz combustible dans le four pour le brûler, de manière à former une flamme fendue à la racine d'un faisceau de tubes refroidi à l'eau et à générer des gaz de combustion à haute température ; et permettre aux gaz de combustion à haute température de passer séquentiellement à travers le groupe de faisceaux de tubes hétérogènes (7), l'économiseur d'énergie (9), le condenseur (10) et le préchauffeur d'air à condensation (11) pour être refroidis à 50°C ou ci-dessous suivi d'une évacuation par une cheminée ; et
permettre à l'eau d'alimentation d'entrer dans le condenseur (10) pour condenser les gaz de combustion, puis d'entrer dans l'économiseur d'énergie (9) pour être préchauffée à 100°C pour entrer dans une partie inférieure du tambour de chaudière (1) ; distribuer uniformément l'eau d'alimentation le long du déversoir (4) et du collecteur horizontal inférieur (6) jusqu'aux extrémités inférieures du groupe de faisceaux de tubes hétérogènes (7) et de la paroi à membrane (2) pour permettre à l'eau d'alimentation d'absorber la chaleur et de s'évaporer continuellement pour former un mélange vapeur-eau ; permettre au mélange vapeur-eau d'entrer dans le collecteur horizontal supérieur (5) pour la pré-séparation vapeur-eau, dans lequel la vapeur peut pénétrer dans un espace de vapeur dans une partie supérieure du tambour de chaudière (1) à travers le tube de guidage de vapeur (3) et faire sortir la chaudière à tube d'angle du haut du tambour de chaudière (1) sous forme de vapeur saturée ; et une interface vapeur-eau dans la chaudière à tube d'angle est située sur un plan central horizontal du tambour de chaudière (1).

20. Procédé d'opération selon la revendication 19, comprenant en outre :
si de la vapeur surchauffée est requise, permettre à la vapeur saturée sortant du tambour de chaudière (1) d'entrer dans un surchauffeur de vapeur (12) pour continuer à absorber la chaleur pour former la vapeur surchauffée ; et fournir la vapeur surchauffée depuis le sommet du surchauffeur de vapeur (12) aux utilisateurs.

21. Procédé d'opération selon la revendication 19, comprenant en outre :
si de la vapeur saturée à basse température ou de l'eau chaude est requise, après que la vapeur saturée quitte le tambour de la chaudière et entre dans le haut du condenseur aérien (14), permettre à la vapeur saturée de libérer de la chaleur du côté coque du condenseur aérien (14) pour former de l'eau liquide et permettre à l'eau liquide de refluer vers le tambour de chaudière (1) ; et permettre à l'eau d'alimentation à basse température d'absorber la chaleur du côté tube du condenseur aérien (14) pour former de la vapeur saturée à basse température ou l'eau chaude.

22. Procédé d'opération selon la revendication 19, **caractérisé en ce que** la vapeur saturée du tambour de chaudière (1) pénètre du côté coque du condenseur aérien (14), libère de la chaleur pour former de l'eau liquide et s'écoule dans le tambour de chaudière (1) le long d'un tuyau au bas du condenseur aérien (14) sous l'action de la gravité ; de l'eau chauffée à basse température s'écoule le long du côté tube du condenseur aérien (14) et absorbe la chaleur libérée par la vapeur saturée pour former de l'eau à haute température supérieure à 110 °C ou de la vapeur saturée humide pour quitter le condenseur aérien (14) ; et
si de l'eau chaude est produite, la chaudière à tube d'angle fonctionne à une micro-pression positive ou à une pression négative sous vide pour produire de l'eau chaude ne dépassant pas 110°C ou 85°C.

23. Procédé d'opération selon la revendication 19, **caractérisé en ce que** lorsque le brûleur prémélangé planaire refroidi par eau (8) est utilisé, du gaz naturel est introduit uniformément dans le prémélangeur de section rectangulaire (13) pour former un gaz prémélangé ; et le gaz prémélangé entre dans le brûleur prémélangé planaire refroidi par eau (8) et est uniformément réparti sur la surface du brûleur prémélangé planaire refroidi par eau (8), et entre dans le four à travers un espace entre les parois membranaire de paroi avant (23) pour être brûlé.
